# EUROPÄISCHE PATENTSCHRIFT

(11) **EP 1 204 526 B1**
(45) Veröffentlichungstag und Bekanntmachung des Hinweises auf die Patenterteilung: **12.05.2004**
(21) Anmeldenummer: 00956174.7
(22) Anmeldetag: 12.07.2000
(51) Int. Cl.: B29C 49/46, B29C 49/12, B29K 67/00, B29L 22/00

(54) **VORRICHTUNG ZUR HERSTELLUNG VON KUNSTSTOFFBEHÄLTERN MITTELS STRECKBLASFORMEN UNTER VERWENDUNG EINES EXPLOSIVEN BLASMEDIUMS**
DEVICE FOR THE PRODUCTION OF PLASTIC CONTAINERS BY STRETCH BLOW FORMING USING AN EXPLOSIVE BLOWING MEDIUM
DISPOSITIF PERMETTANT DE FABRIQUER DES RECIPIENTS EN PLASTIQUE PAR FORMAGE PAR ETIRAGE-GONFLAGE, A L'AIDE D'UN MILIEU DE GONFLAGE EXPLOSIF

(30) Priorität: 16.08.1999 DE 19938724
(43) Veröffentlichungstag der Anmeldung: 15.05.2002
(73) Patentinhaber: Tetra Laval Holdings & Finance S.A., 1009 Pully (CH)
(72) Erfinder: CHATARD, Dominique, D-69121 Heidelberg (DE); FUCHS, Jens, D-55278 Uelversheim (DE); KINDINGER, Hans, D-64625 Wilmshausen (DE); KUHN, Rolf, D-55218 Ingelheim (DE); RIEDEL, Thomas, D-64584 Biebesheim (DE); SENDOBRY, Eberhard, D-64668 Rimbach (DE); WLACH, Rüdiger, D-64572 Büttelborn (DE); WILHELM, Lothar, D-61184 Karben (DE)
(74) Vertreter: Weber, Dieter, Dr.
(86) Internationale Anmeldenummer: PCT/EP2000/006604
(87) Internationale Veröffentlichungsnummer: WO 2001/012416

(56) Entgegenhaltungen:
- WO-A-97/13632
- WO-A-98/06559
- GB-A- 1 026 056
- US-A- 4 214 860
- PATENT ABSTRACTS OF JAPAN vol. 005, no. 076 (M-069), 20. Mai 1981 (1981-05-20) & JP 56 027330 A (YOSHINO KOGYOSHO CO LTD), 17. März 1981 (1981-03-17)

## Beschreibung

Die Erfindung betrifft eine Vorrichtung zur Herstellung von Behältem aus einem durch Streck-Blasen verformbaren Kunststoff mit einer Form, deren Innenraum dem fertigen Behälter entspricht, der an seinem offenen Ende von einer Aufnahme gehalten ist, wobei mit einer Dosiereinheit verbundene Leitungen an der Aufnahme vorgesehen sind, ein beweglicher Streckstempel axial durch die Aufnahme geführt ist und eine Zündeinrichtung angeordnet ist, um ein explosives Gasgemisch innerhalb des Behälters zu zünden, und wobei Heiz- und Kühleinrichtungen vorgesehen sind.

Aus der internationalen Veröffentlichung mit der Nummer WO98/06559 ist eine Vorrichtung der vorstehend beschriebenen Art zur Herstellung von Behältern aus Kunststoff bekannt, beispielsweise von Flaschen aus Polyethylenterephthalat (PET). Diese PET-Flaschen werden dadurch hergestellt, daß zunächst ein Vorformling auf eine für das Streck-Blasen geeignete Temperatur von etwa 100 - 120°C erwärmt wird. Dieser Vorformling wird in eine der Form des Behälters entsprechende Werkzeugform eingebracht, und es wird ein Streckdruck von mindestens 2 bar, üblicherweise 5 - 10 bar, erzeugt. Mit Hilfe eines axial und im allgemeinen vertikal bewegbaren Streckstempels wird der Vorformling axial gestreckt. Darauf wird in dem Vorformling ein Blasdruck erzeugt, der im Bereich von 40 bar liegt. Dadurch wird die Wand des Vorformlings an die Innenwand der Form gepreßt und dadurch der Behälter geformt. Während der Streckdruck durch Einblasen eines explosiven Gasgemisches in den Vorformling, zum Beispiel ein Gemisch aus Knallgas und einem Inertgas, erzeugt wird, entsteht der Blasdruck durch Zünden des explosiven Gasgemisches, und dieser Blasdruck preßt die Wandung des Zwischenformlings bzw. des teilweise vorgeformten Behälters ganz an die Innenwand der Form. Auf diese Weise wird die PET-Flasche erstellt. Das Zünden des explosiven Gasgemisches erfolgt durch einen Funkengenerator oder eine Strahlung, und das explosive Gasgemisch ist ein Gemisch eines Oxidationsmittels und eines oxidierbaren Bestandteiles, wie zum Beispiel Wasserstoff, Methan oder dergleichen. In dem gleichen Prozeß des Streckens und Blasens wird durch das Erreichen eines kurzzeitigen Temperaturanstieges eine Sterilisation der herzustellenden Behälter möglich, so daß diese Technik als sehr vorteilhaft angesehen wurde.

Es hat sich allerdings bei der technischen Umsetzung gezeigt, daß die mit der bekannten Vorrichtung hergestellten Behälter industriell nicht verwendet werden konnten. Sie waren bezüglich Form und Volumen und auch bezüglich ihrer optischen Erscheinung nicht in ausreichender Qualität herstellbar und reproduzierbar. So war es beispielsweise nicht möglich, PET-Flaschen mit klaren durchsichtigen Wandungen herzustellen. Man vermutete, daß dieses teilweise unschöne Aussehen, sofern es nicht bewußt herbeigeführt wurde oder aus bestimmten Gründen in Kauf genommen werden konnte, durch unvermeidbare Temperatureinflüsse entstand.

Dem gegenüber liegt der Erfindung die Aufgabe zugrunde, eine Vorrichtung der eingangs genannten Art zu schaffen, mit deren Hilfe auch Kunststoffbehälter mit besserem Erscheinungsbild, zum Beispiel mit weitgehend klar durchsichtiger Wandung, ohne großen Mehraufwand herstellbar sind.

Diese Aufgabe wird durch die Erfindung dadurch gelöst, daß die Aufnahme an ihrem dem Behälter abgewandten Ende fließmitteldicht mit einem Verteilerblock in Eingriff bringbar ist, durch welchen der Streckstempel in axialer Verlängerung der Aufnahme beweglich hindurchgeführt ist und an welchem wenigstens ein Fließmittelanschluß angebracht ist, daß der wenigstens eine Fließmittelanschluß zum Abdichten des vorrichtungsseitigen Innenraumes verschließbar ist und daß die Zündeinrichtung in dem vorrichtungsseitigen Innenraum angebracht ist. Im Verlaufe des Herstellungsprozesses ist die Aufnahme in einem Stadium mit dem Verteilerblock in dichtendem Eingriff und im anderen Stadium von dem Verteilerblock außer Eingriff gebracht. Im Stadium des Streckens ist der Streckstempel durch den Verteilerblock und damit auch axial durch die Aufnahme hindurch bewegbar geführt.

Bei der einen Ausführungsform der Erfindung wird ein vorrichtungsseitiger Innenraum durch die aneinandergeschlossenen Vorrichtungsteile von Verteilerblock, Aufnahme und in der Form sitzendem Behälter gebildet. Bei dieser Ausführungsform wird Fließmittel durch den wenigstens einen Fließmittelanschluß in den Verteilerblock und durch diesen in die Aufnahme und den Behälter geführt.

Bei einer anderen Ausführungsform wird der vorrichtungsseitige Innenraum durch dieselben Vorrichtungsteile gebildet, wobei zusätzlich aber Fließmittel auch durch den Streckstempel dem Inneren des Behälters zugeführt werden kann.

Bei einer weiteren Ausführungsform wird der vorrichtungsseitige Innenraum nur durch den Behälter und die daran angeordnete Aufnahme gebildet, wenn zum Beispiel der Verteilerblock von der Aufnahme abgetrennt und die Aufnahme geschlossen ist. Axial durch die Aufnahme ist der Streckstempel geführt, und dieser kann eine Zufuhrleitung enthalten. Er kann aber auch massiv ausgeführt sein.

Jeder der verschiedenen vorrichtungsseitigen Innenräume (je nach Ausführungsbeispiel) ist aber im Bereich des einen Fließmittelanschlusses oder der Vielzahl von Fließmittelanschlüssen verschließbar. Nur in einem verschlossenen vorrichtungsseitigen Innenraum bewirkt die durch die dort außerdem angeordnete Zündeinrichtung hervorgerufene Explosion die gewünschten Parameter von kurzzeitig hohem Druck und höherer Temperatur. Es versteht sich, daß diese Innenräume nach Beendigung des Herstellungsprozesses wieder geöffnet werden können.

Der Vorteil des begrenzten vorrichtungsseitigen Innenraumes ist sein kleines Volumen. Das Volumen in dem herzustellenden Behälter ist dabei weniger kritisch. Der Behälter und vorzugsweise auch die diesen stützende Aufnahme werden nämlich nach dem jeweiligen Herstellungsprozeß aus der Vorrichtung herausgeführt, um weiteren Bearbeitungen unterzogen zu werden. Das vorrichtungsseitige Volumen, welches an dem Umschließen des Explosionsraumes beteiligt war, ist durch die Maßnahmen der Erfindung im Verhältnis zu der bekannten Vorrichtung derart klein, daß Reaktionsprodukte, bei Verwendung von Knallgas zum Beispiel Wasser, in erheblich geringerer Menge übrig bleibt. Man hat festgestellt, daß die Trübung der Behälterwandungen dadurch entstanden, daß beim Einsatz von Knallgas gebildetes Wasser in Tröpfchenform mit erheblicher kinetischer Energie von innen auf die Wandungen geschleudert wird und dort Oberflächenveränderungen hervorruft, die letztlich zu einer Trübung führen. Bei der ersten Explosion und auch noch bei einem kontinuierlichen Verfahren zur Herstellung von nur drei bis sechs Behältern hat sich noch nicht genügend Reaktionsprodukt in den vorrichtungsseitigen Innenräumen, zum Beispiel Zu- und Ableitungen, angesammelt, so daß kaum Wassertröpfchen zur Trübung der Behälterinnenwandung vorhanden waren. In einem längeren kontinuierlichen Herstellungsverfahren entstand aber durch die Vielzahl der aufeinanderfolgenden Explosionen im Laufe der Zeit eine derart große Menge Reaktionsprodukt (Wasser), daß von da an bei jeder folgenden Explosion die Trübung der Behälterwandungen unvermeidbar wurde.

Das Verschließen eines kleinen vorrichtungsseitigen Innenraumes, der nur durch den Innenraum des Verteilerblockes, der Aufnahme und des Behälters selbst gebildet wird, erlaubt insbesondere dadurch nicht ein Ansammeln der unerwünschten Reaktionsprodukte (Wasser), daß mindestens der Behälter selbst, vorzugsweise sogar der Behälter mit Aufnahme, nach der Explosion abgeführt wird und damit die angesammelten Reaktionsprodukte mitführt. In dem übrigen vorrichtungsseitigen Innenraum verbleiben daher unmerkliche Mengen an Reaktionsprodukt, die selbst bei einem kontinuierlichen Herstellungsverfahren nach längerer Zeit vernachlässigbar bleiben können.

Durch diese aufbautechnische Veränderung der Vorrichtung ist es überraschend möglich, auch ohne großen Mehraufwand Kunststoffbehälter mit besserem Erscheinungsbild herzustellen, bei PET-Flaschen zum Beispiel solche, die eine weitgehend klar durchsichtige Wandung haben.

Die Erfindung ist vorteilhaft weiter dadurch ausgestaltet, daß die Aufnahme hohl ist und an ihrem dem Behälter abgewandten Ende eine Dichtfläche aufweist, durch welche der Streckstempel in axialer Verlängerung der Aufnahme beweglich hindurchgeführt ist. Die Aufnahme ist vorzugsweise hohl, damit der Streckstempel durch die gesamte, länglich ausgestaltete Aufnahme von ihrem einen Ende axial bis zu ihrem gegenüberliegenden Ende hindurchbewegt werden kann. Gleichwohl ist die Aufnahme mit dem Verteilerblock fließmitteldicht durch die Dichtfläche verbindbar, die sich um den Raum für den Streckstempel herum erstreckt und daher ringförmig ist. Es ist günstig, wenn der Streckstempel durch diese ringförmige Dichtfläche fließmitteldicht hindurchgeführt ist, damit gegebenenfalls Fließmittel, vorzugsweise Gase, aus dem Verteilerblock durch die Aufnahme in den herzustellenden Behälter gedrückt werden können, ohne daß die Gase nach außerhalb der Vorrichtung gelangen. Durch die hohle Ausgestaltung der Aufnahme kann also nicht nur der Streckstempel in den Behälter hindurch geführt und aus diesem heraus gezogen werden, sondern es können auch Fließmittel zwischen Außenfläche des Streckstempels und Innenfläche der Aufnahme in den Behälter geführt werden, und zusätzlich wird das Volumen innerhalb der Aufnahme verhältnismäßig klein gehalten. Insbesondere kann der für die Explosion vorgesehene Raum auf den erwähnten vorrichtungsseitigen Innenraum beschränkt werden, so daß in den Zuleitungen mit Sicherheit chemische Reaktionen mit dem Entstehen von Reaktionsprodukten nicht stattfinden.

Zweckmäßig ist es gemäß der Erfindung ferner, wenn das Verschließmittel zum Abdichten des vorrichtungsseitigen Innenraumes ein Rückschlagventil ist. Rückschlagventile sind in unterschiedlichsten Ausgestaltungen an sich bekannt. An jedem Anschluß des Verteilerblockes kann ein Rückschlagventil angebracht sein, wenn die Ausführungsform gewählt ist, bei weicher auch der Verteilerblock zu der Vorrichtung gehört welche den vorrichtungsseitigen Innenraum vorgibt. Eine andere Ausführungsform von Rückschlagventil kann auch zusätzlich oder alternativ am Streckstempel vorgesehen sein, gegebenenfalls sogar im Streckstempel, wie nachfolgend bei einer bevorzugten Ausführungsform beschrieben ist. Der vorrichtungsseitige Innenraum wird bei einer günstigen Ausführungsform durch den herzustellenden Behälter und die Aufnahme gebildet, wenn diese Gesamtheit zum Beispiel vom Verteilerblock abtrennbar ist.

Vorteilhaft ist es gemäß der Erfindung ferner wenn der Strecksternpel hohl ausgestaltet ist und mit wenigstens einer an einer Streckspitze angeordneten Austrittsöffnung, wenigstens einem Fließmitteleinlaß und mit wenigstens einem diese verbindenden Innenkanal versehen ist und wenn vorzugsweise im Bereich der Austrittsöffnung ein Rückschlagventil angebracht ist. Im Falle des hier beschriebenen hohlen Streckstempels befindet sich das Rückschlagventil also in dem Streckstempel und dabei im Bereich der Austrittsöffnung. Streckstempel für das Streck-Blasverfahren sind an sich bekannt. Der vorgewärmte Vorformling wird mit Hilfe des jeweiligen Streckstempels dadurch gestreckt, daß seine Streckspitze mit dem Boden des Vorformlings in Eingriff tritt und diesen fortdrückt. Bei der hier betrachteten Ausführungsform ist es möglich, einen Innenkanal in Längsrichtung des Streckstempels so anzuordnen, daß von seinem zuführseitigen Ende von dem Fließmitteleinlaß das Fließmittel auf die gegenüberliegende Seite in Richtung zu der Streckspitze gedrückt und aus der Austrittsöffnung herausgedrückt werden kann. Bei dieser Ausführungsform kann man wenigstens ein Gas durch den Innenkanal in dem hohlen Streckstempel in den Raum innerhalb des zu erzeugenden Behälters transportieren, weil das Fließmittel an der Austrittsöffnung neben der Streckspitze direkt in das Volumen des Behälters gebracht werden kann.

Bei einer anderen Ausführungsform können zusätzlich zu dem erwähnten Fließmitteleintaß mit Innenkanal im hohlen Streckstempel Fließmittelanschlüsse vorgesehen sein, zum Beispiel an dem Verteilerblock, so daß unterschiedliche Gase durch unterschiedliche Leitungen zugeführt werden können. Auch bei diesen Ausführungsformen ist stets dafür gesorgt, daß in den Zuleitungen keine Verbrennung und damit keine chemische Reaktion stattfinden kann, wenn zum Beispiel das explosive Gas in dem Volumen des herzustellenden Behälters gezündet wird.

Bei einer bevorzugten Ausführungsform wird vor der Zündung des explosiven Gasgemisches das Rückschlagventil in dem hohlen Streckstempel geschlossen. Eine Verbrennung kann dann nicht einmal in dem Innenkanal in dem hohlen Streckstempel stattfinden. Dadurch, daß die Zuführ- und Abführleitungen für das Fließmittel, vorzugsweise die Gase, vor der Explosion gegenüber dem vorrichtungsseitigen Innenraum geschlossen und abgetrennt sind, beschränkt sich das Volumen für die chemische Reaktion, insbesondere die Verbrennung, ganz auf den vorrichtungsseitigen Innenraum. Bei geringeren Mengen an Fließmittel, die an der Verbrennung beteiligt sind, gibt es auch geringere Mengen an Reaktionsprodukten, so daß mit Vorteil kaum noch Beschädigungen oder Beeinträchtigungen der inneren Oberflächen des herzustellenden Behälters befürchtet werden müssen. Dadurch kann das Erscheinungsbild der Behälterwandungen erheblich verbessert werden. Im übrigen können alle Vorteile der bekannten Blas-Streckverfahren ausgenutzt werden, einschließlich der Sterilisation durch die Verbrennung.

Zweckmäßig ist es gemäß der Erfindung ferner, wenn im Bereich der Austrittsöffnung eine Zündeinrichtung innerhalb des hohlen Streckstempels auf der der Austrittsöffnung zugewandten Seite des Rückschlagventiles angebracht und vorzugsweise über in dem hohlen Streckstempel verlaufende Kabel oder Leiterbahnen mit einer Steuereinheit elektrisch verbunden ist. Das Zünden des explosiven Fließmittelgemisches kann bei einem solchen Aufbau des hohlen Streckstempels nahezu im Zentrum des herzustellenden Behälters erfolgen. Weiter außerhalb des Behälters gelegene Vorrichtungsteile können dann prozeßabhängig abgekoppelt oder geschlossen werden. Die Betätigung der Zündeinrichtung über das Kabel oder die Leiterbahn gelingt ebenso vorteilhaft durch die hohle Ausgestaltung des Streckstempels. Die Anbringung des Rückschlagventiles stört nicht, sondern sie ist vorzugsweise so ausgewählt, daß der gesamte Innenkanal in dem hohlen Streckstempel durch das Rückschlagventil von dem Explosionsraum trennbar ist, nämlich bei Schließen des Rückschlagventiles.

Bei weiterer zweckmäßiger Ausgestaltung der Erfindung ist der in Längsrichtung beweglich angetriebene, hohle Streckstempel ein Stahlrohr mit einer kappenförmigen Streckspitze, an welcher der Fließmittelaustritt in Lochstruktur angebracht ist, wobei das Rückschlagventil einen gegen einen am Stahlrohr innen befestigten Dichtsitz beweglichen und vorzugsweise Verwirbelungsmittel tragenden Ventilkörper aufweist. Der hohle Streckstempel läßt sich also praktisch aus einem Stahlrohr aus nicht-rostendem Stahl herstellen, dessen Streckspitze allerdings mit einer austauschbaren und somit an die Eigenschaften der jeweils zu formenden Vorformlinge anpaßbaren Kappe versehen ist, weil diese im Verlaufe des Prozesses den vorgewärmten Vorformling unter Eingriff seines Bodens dehnt. An der kappenförmigen Streckspitze ist der Fließmittelaustritt angebracht, vorzugsweise im Endbereich des Stahlrohres, wo nämlich die Streckspitze mit dem Stahlrohr durch eine Schraube oder ein anderes Verbindungsmittel verbunden ist. Möglichst weit oben an der Streckspitze befindet sich der Fließmittelaustritt. Er hat Lochstruktur. Das bedeutet, daß mindestens ein Loch in der Außenwandung des Rohres derart angeordnet ist, daß die durch den Innenkanal des hohlen Streckstempels fließenden Gase oder anderen Fließmittel durch dieses Loch bzw. eine entsprechende Anzahl von Löchern aus dem Stahlrohr austreten können. Es ist auch möglich, daß der Fließmittelauslaß eine andere Anordnung von mit regelmäßig oder unregelmäßig verteilten Löchern versehenem Austritt haben kann. Unter Lochstruktur kann man auch einen porösen Körper aus Sintermetall, Keramik oder dergleichen verstehen, welcher dann gleichzeitig als Rückschlagschutz dienen kann.

Eine bevorzugte Ausführungsform der Erfindung verwendet einen hohlen Streckstempel mit einem Rückschlagventil, welches ebenfalls im Bereich der Streckspitze angeordnet ist, allerdings in einem gewissen Abstand, welcher für die Aufnahme des Fließmittelaustritts einerseits und der Zündeinrichtung andererseits verwendet wird. Das Rückschlagventil bei dieser Ausführungsform weist einen Ventilkörper auf, der gegen einen Dichtsitz innen am Stahlrohr so bewegt werden kann, daß dadurch das Rückschlagventil geschlossen wird. Wird ein solcher Streckstempel mit starker vertikaler Komponente, vorzugsweise ganz vertikal, in der Vorrichtung gemäß der Erfindung angeordnet, dann übt der Ventilkörper durch sein Gewicht eine Art federnde Vorspannung nach unten gegen den Dichtsitz aus, so daß ohne ein aus dem Innenkanal herausströmendes Fließmittel der Ventilkörper infolge seines Gewichtes immer auf den Dichtsitz herunterfällt und damit das Rückschlagventil schließt. Es versteht sich von selbst, daß das Schließen des Rückschlagventiles auch etwa durch den Einbau einer Feder erreicht werden kann, was insbesondere bei nicht vertikaler Anordnung des Streckstempels notwendig wird. Die Zündung erfolgt ohnehin in dem vorrichtungsseitigen Innenraum, d.h. in dem oberen Restraum des Stahlrohres neben dem Fließmittelaustritt und außerhalb des Streckstempels in dem Volumen des Behälters, so daß der durch die Explosion gesteigerte Gasdruck zusätzlich den Ventilkörper gegen den Dichtsitz drückt und das Rückschlagventil schließt.

Der Ventilkörper kann vorzugsweise Verwirbelungsmittel tragen. Man erreicht dadurch eine bessere Verwirbelung des Fließmittelgemisches beim Austritt aus dem Streckstempel. Zum Beispiel kann man den beweglichen Ventilkörper mit an seiner äußeren Oberfläche spiralförmig verlaufenden Fließmittelführungskanälen versehen. Alternativ kann man auch Austrittslöcher schräg in den Streckstempel bohren, um so dem austretenden Fließmittel eine tangentiale Geschwindigkeitskomponente zu geben.

Bereits in dem Stahlrohr des hohlen Streckstempels sind bei anderen Ausführungsformen oder alternativ zusätzlich zu den Maßnahmen bei den oben beschriebenen Ausführungsformen Mittel für ein gutes Durchmischen der Fließmittel vorgesehen. So kann man mit seitlichen Schaufeln versehene tannenbaumförmige Einbauten in dem hohlen Streckstempel vorsehen, um während der Durchleitung der Fließmittel deren Verwirbelung zu verbessern.

Die kappenförmige Streckspitze kann aus unterschiedlichen Materialien hergestellt werden, wobei sie aus massivem Kunststoff, aus einer kunststoffummantelten Stahlkappe oder auch aus Keramik bestehen kann. Es ist auch bereits eine Vorrichtung betrieben und gemessen worden, bei welcher die Streckspitze aus Stahl besteht. Der Grund, Stahl anstelle Kunststoff einzusetzen und zu untersuchen besteht darin, eine übermäßige Erwärmung und damit Beeinträchtigung der Außenoberfläche der Streckspitze im kontinuierlichen Betrieb zu vermeiden.

Es ist gemäß der Erfindung von Vorteil, wenn die Aufnahme senkrecht zu ihrer Längsmittelachse bewegbar angetrieben ist. Hierdurch ist es überraschend möglich, einen großen Teil des vorrichtungsseitigen Innenraumes, nämlich den Raum in der hohlen Aufnahme, nach jedem Streck- und Blasprozeß, d.h. insbesondere nach jeder Verbrennung, von der im übrigen ortsfesten Vorrichtung, zum Beispiel dem Verteilerblock mit dem Hohlkolben, getrennt abzutransportieren mitsamt den an den Wandungen anhaftenden Reaktionsprodukten. Alle diese Reaktionsprodukte nehmen bei dem nächstfolgenden Prozeß des Streckens und Blasens und insbesondere bei dem chemischen Prozeß der Verbrennung nicht mehr teil. Der vorrichtungsseitige Innenraum, der allenfalls mit Reaktionsprodukten behaftet sein kann, beschränkt sich dann auf den Raum im Hohlstempel und im Verteilerblock. Beim Einsatz von Knallgas wird dann derart wenig Wasser als Reaktionsprodukt in den nächsten Verbrennungsprozeß mitgenommen, daß eine Beeinträchtigung der Behälterinnenwandungen während und nach.der Explosion nicht zu befürchten ist.

Weiterhin ist eine bevorzugte Ausführungsform der Erfindung dadurch gekennzeichnet, daß die Aufnahme an dem dem Verteilerblock abgewandten Ende zur Bildung eines Serviceraumes erweitert ist, in weichen vorzugsweise eine Zentrierung eingesetzt ist. Der jeweils herzustellende Behälter hat im Falle einer PET-Flasche an einem Längsende die Einfüll- bzw. Ausgießöffnung in Form eines Bundes mit Außengewinde. Bei der bekannten Vorrichtung umgreift die Aufnahme dieses offene Ende des Behälters. Auch erfindungsgemäß haltert man den herzustellenden Behälter am praktischsten an seinem offenen Ende, welches vorzugsweise in Form eines Bundes mit Außengewinde vorliegt. Das Befüllen eines sterilisierten Behälters erfolgt durch diese Einfüll- bzw. Ausgießöffnung, die auch allgemein als Verschluß bezeichnet werden kann. Damit das sterile Füllgut nicht mit keimbelasteten Flächen außen oder innen an dem Verschluß in Berührung kommt, wäre es zweckmäßig, wenn nicht nur das Innere des Behälters bei dem erfindungsgemäßen Verfahren während des Verbrennungsprozesses sterilisiert wird, sondern wenn auch der stirnseitig obere Ringrand und möglichst sogar außen das Gewinde steril sind. Wird nun gemäß der Lehre der Erfindung die Aufnahme an demjenigen Ende erweitert, wo der Behälter aufgenommen wird, dann steht hier ein, wenn auch kleines zusätzliches Volumen für das an der Verbrennung teilnehmende Gas zur Verfügung, welches mit der Oberfläche des Außengewindes in Verbindung kommt und dieses während des Blasprozesses sterilisiert.

Bevorzugt ist es dabei, wenn in diesem erweiterten Serviceraum eine Zentrierung eingesetzt ist, weil sich dann sowohl der Vorformling als auch der spätere Behälter in der Aufnahme gut zentrieren und haltern läßt. Die Zentrierung ist zwar ein zusätzliches Teil, welches den Serviceraum teilweise ausfüllt, die Berührung der sterilisierenden Gase während und nach der Verbrennung wird dadurch aber nicht behindert oder beeinträchtigt, zumal ein Randflansch zusätzlich für eine Halterung sorgt.

Günstig ist es gemäß der Erfindung auch, wenn in dem vorzugsweise ortsfesten Verteilerblock ein relativ zu diesem axial bewegbar angetriebener Hohlkolben vorgesehen ist, der an seinem äußeren, der Aufnahme zugewandten Ende eine zu der Aufnahme passende, ringförmige Gegendichtfläche aufweist. Zwar kann man den Verteilerblock auch einstückig aufbauen und mit einer entsprechend bewegten Aufnahme dichtend so verbinden, daß diese Verbindung zwischen Aufnahme und Verteilerblock gesteuert gelöst werden kann. Das Lösen gelingt aber durch die vorstehende Maßnahme mit dem Hohlkolben besonders günstig. Um den Verteilerblock mit der Aufnahme zu verbinden bzw. von dieser zu lösen braucht man dann nämlich weder den Verteilerblock noch die Aufnahme axial - etwa in Richtung des hohlen Streckstempels - zu bewegen, weil der Hohlkolben axial bewegbar angetrieben ist, vorzugsweise pneumatisch. An seinem äußeren Ende trägt der Hohlkolben eine zu der Aufnahme passende Gegendichtfläche, die beim Anschließen der Aufnahme an den Verteilerblock mit der Dichtfläche der Aufnahme in dichtenden Eingriff tritt. Nach dem Blas- und Sterilisierungsprozeß wird die Bewegung des Hohlkolbens umgesteuert, die Dichtfläche kommt von der Gegendichtfläche außer Eingriff, und dann kann die Aufnahme in der vorstehend beschriebenen Weise senkrecht zu ihrer Längsachsenrichtung verschoben werden. Dieser Verschiebetransport erfolgt jedesmal nach einem Blas-Sterilisierungsvorgang des schrittweise laufenden Herstellungsverfahrens. Erfindungsgemäß kann man ferner in dem Verteilerblock zur Führung des Streckstempels eine dichtende Durchführung in Flucht zu dem Hohlkolben anbringen. Mit dieser gelingt die Bewegung des Streckstempels in axialer Richtung durch den Verteilerblock, dessen Hohlkolben, die nachgeschaltete Aufnahme und in den Behälter hinaus bzw. aus diesen Teilen heraus, obgleich der vorrichtungsseitige Innenraum gasdicht abgeschlossen bleibt.

Je nach den Führungswegen des Fließmittels durch den Streckstempel, an diesem vorbei oder beides kann es vorteilhaft sein, wenn erfindungsgemäß wenigstens eine mit der Dosiereinheit verbundene Zuführ- und eine Abführleitung an den Verteilerblock angeschlossen ist. Die Abführleitung dient dem Abführen der Reaktionsprodukte, zum Beispiel der Vebrennungsgase und gegebenenfalls flüssiger Rückstände.

Die Zuführleitung ist mit der Dosiereinheit verbunden, die nachfolgend bei einer bevorzugten Ausführungsform ausführlicher noch beschrieben wird. Man kann zum Beispiel für Knallgas durch eine Zuführleitung Wasserstoff und durch eine andere Zuführleitung ein Gemisch aus Sauerstoff und einem Inertgas zuführen. Dabei ist es zweckmäßig, wenn man aus einer weiteren Zuführleitung ein Spülfließmittel zum Austreiben der Reaktionsprodukte aus der Abführleitung drückt.

Es sei auch angemerkt, daß Drucksensoren und Temperaturmeßgeräte an verschiedenen Stellen in der Vorrichtung angeordnet sein können, vorzugsweise im Bereich des Verteilerblocks, aber auch in dem hohlen Streckstempel.

Es versteht sich auch, daß die Zündeinrichtung auf unterschiedlichen physikalischen Prinzipien beruhen kann. Die Zündung des Mediengemisches erfolgt im einfachsten Fall elektrisch über eine Funkenstrecke, die zum Beispiel aus einer Zündkerze besteht, die am Streckstempel oder am Verteiler angebracht sein kann; oder mittels statischer Entladung. Daneben sind auch andere Zündmethoden denkbar, zum Beispiel durch Einstrahlung elektromagnetischer Energie, etwa in Form eines Laser-, Hochfrequenz- oder Mikrowellenpulses oder auch mit Hilfe eines katalytischen Vorganges.

Eine andere günstige Ausführungsform einer Dosiereinheit sieht das Mischen verschiedener Fließmittel unmittelbar vor dem Streckstempel mit direkt anschließender Einleitung in den Vorformling vor. Dies stellt insbesondere unter Sicherheitsaspekten einen guten Kompromiß dar zwischen der Herstellung des Gemisches in einem separaten, explosionsgeschützten Druckgefäß und der vorstehend beschriebenen Dosiereinheit, bei welcher mittels Dosierzylindern einzelne Fließmittel und/oder Fließmittelgemische dem vorrichtungsseitigen Innenraum zugeführt werden.

Eine praktische Ausführungsform ist erfindungsgemäß weiterhin dadurch gekennzeichnet, daß in jeder der an dem Verteilerblock angeschlossenen Zuführ- und Abführleitungen ein Rückschlagventil angeschlossen ist und die Zündeinrichtung in dem Verteilerblock angebracht ist. Den Streckstempel umgeben dann der Raum im Verteilerblock, der Raum zwischen Streckstempel und Hohlkolben und der zwischen Streckstempel und Aufnahme mit Abstand. Dieser Abstand bedeutet einen Ringraum, den man als Fließmittelkanal betrachten und entsprechend auslegen kann. Bei großer Auslegung können größere Mengen Fließmittel in den Behälter gepumpt werden und umgekehrt. Die durch die Zündeinrichtung im Verteilerblock ausgelöste, Explosion pflanzt sich dann sehr schnell in dem gesamten mit Fließmittel gefüllten Raum fort. Dieser Raum ist durch die Rückschlagventile an den Leitungen am Verteilerblock begrenzt.

Bei vorteilhafter weiterer Ausgestaltung der Erfindung weist der Hohlkolben an seinem der Aufnahme zugewandten Ende einen ringförmigen Dichtsitz auf, und der Streckstempel trägt an seinem in den herzustellenden Behälter bewegbaren Ende für den Eingriff mit dem Dichtsitz eine senkrecht zu seiner Längsachse radiale Erweiterung. Diese kann Kugel-, Kegel-, Ringform oder dergleichen haben. Der Streckstempel ist bei dieser Ausführungsform massiv und kann mit kleinerem Durchmesser ausgestaltet sein mit der Folge, daß ein größerer Strömungskanal für das Fließmittel außerhalb des Streckstempels vorhanden ist. Dies begünstigt einen schnellen, kurzzeitigen Herstellungsprozeß. Der für die Explosion vorgesehene Raum wird durch Herausfahren des Streckstempels und damit Hereinfahren der Erweiterung in den Dichtsitz ohne die Notwendigkeit weiterer Rückschlagventile geschlossen, wobei dann lediglich die Zündeinrichtung im Bereich der Aufnahme angeordnet sein muß.

Eine andere radiale Erweiterung des Streckstempels ist auch in seinem mittleren Bereich denkbar, wobei dort besser von einer Stufe gesprochen wird. Diese Erweiterung kann dann ebenfalls durch Eingriff mit dem Dichtsitz am Hohlkolben den Raum für die Explosion abschließen, während der Streckstempel aber noch in der ausgefahrenen Streckposition steht. Dadurch kann man den Prozeß zeitlich weiter verkürzen, weil man nicht erst den Streckstempel aus dem Behälter herauszufahren braucht und doch schon die Explosion einleiten kann.

Es kann vorteilhaft sein, wenn erfindungsgemäß die eingangs erwähnten Kühleinrichtungen dafür verwendet werden, den Streckstempel separat zu kühlen. Dieser kann nämlich in dem stufenweise kontinuierlichen Verfahren schon nach mehreren Schritten eine Temperatur von 100°C oder höher bekommen, so daß die Materialien der Vorrichtung einer hohen Beanspruchung unterworfen werden. Deshalb ist es zweckmäßig, die Temperatur des beweglichen Streckstempels zu limitieren, und dies gelingt trotz der wiederholten Explosionen gut durch Vorsehen entsprechender Kühleinrichtungen.

Zwar wurde vorstehend der Innenkanal des hohlen Streckstempels als Zuführleitung beschrieben, es versteht sich aber, daß die Gemischzufuhr auch über den Verteilerblock und die Ableitung der Reaktionsprodukte dann entsprechend über den Streckstempel erfolgen können.

Weitere Vorteile, Merkmale und Anwendungsmöglichkeiten der vorliegenden Erfindung ergeben sich aus der folgenden Beschreibung in Verbindung mit den anliegenden Zeichnungen, die bevorzugte Ausführungsformen zeigen. Es stellen dar:
- Figur 1: im Schnitt den Transport von Vorformlingen und fertiggeblasenem Behälter über einem Verteiler,
- Figur 2: ein Diagramm des Druckverlaufes über der Zeit in dem Vorformling bzw. dem herzustellenden Behälter,
- Figur 3a: die linke Hälfte einer ersten Ausführungsform einer Dosiereinheit, die sich nach rechts mit den abgebrochenen Leitungen fortsetzt,
- Figur 3b: die rechte Hälfte der Dosiereinheit der Figur 3b, d.h. die Fortsetzung der Leitungen von links her mit dem streckgeblasenen Behälter rechts oben,
- Figur 3c: die linke Hälfte einer zweiten Ausführungsform einer Dosiereinheit, die sich ebenfalls nach rechts mit den abgebrochenen Leitungen fortsetzt,
- Figur 3d: die rechte Hälfte der Dosiereinheit der Figur 3c analog der Figur 3b;
- Figur 4: in vergrößertem Maßstab das obere bzw. behälterseitige Ende des hohl ausgebildeten Streckstempels,
- Figur 5: das gleiche Ende des Streckstempels wie in Figur 4 im Schnitt dargestellt, hier jedoch perspektivisch,
- Figur 6: einen Betriebszustand der Vorrichtung, bei welcher im Vergleich zu Figur 1 der in der Mitte unten angeordnete Verteiler mit der Aufnahme dichtend verbunden ist, wobei der Behälter vorgestreckt und geformt wird,
- Figur 7: einen anderen Zustand des Streck-Blasverfahrens, bei welchem durch Explosion geformt wird,
- Figur 8: den gleichen Verfahrensschritt wie Figur 7, jedoch perspektivisch und teilweise abgebrochen,
- Figur 9: mit einer anderen Ausführungsform ein ähnlicher Verfahrensschritt wie bei Figur 6, wobei jedoch das Vorstrecken und Formen durch einen anders ausgestalteten Streckstempel erfolgen,
- Figur 10: die gleiche Ausführungsform wie in Figur 9, jedoch das Formen durch Explosion,
- Figur 11: eine ähnliche Darstellung der Vorrichtung wie in den Figuren 7 und 10, wobei eine andere Art von Streckstempel verwendet wird, und
- Figur 12: vergrößert im Schnitt die Aufnahme mit der oben eingesetzten Zentrierung, durch welche der herzustellende Behälter abgestützt wird.

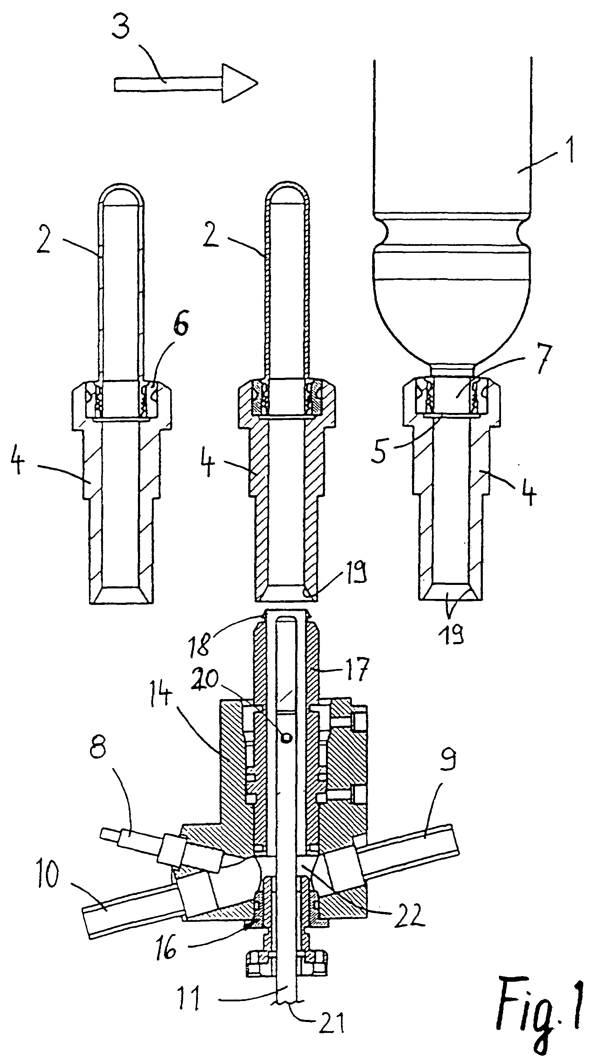

Figur 1 zeigt oben rechts abgebrochen einen durch das Streck-Blasverfahren hergestellten Behälter 1 aus Kunststoff, zum Beispiel PET. Während der fertig geformte und aus dem Werkzeug entformte Behälter mit 1 bezeichnet ist ist der durch Strecken und Blasen schon teilweise vorgeformte Behälter in den nachfolgenden Zeichnungen mit 1' bezeichnet. Hergestellt wird der Behälter 1 aus einem mit 2 bezeichneten Vorformling. Von der gesamten Herstellungseinheit sind nur die für die Erfindung wichtigen Teile gezeigt, während an sich bekannte Teile des Werkzeuges weggelassen sind, so zum Beispiel die Form, deren Innenraum dem fertigen Behälter 1 entspricht. Es fehlen in den Darstellungen auch die Halterungen und Schienen für den Transport der Werkstücke gemäß Pfeil 3 in die Behandlungsstation und aus dieser heraus. Gezeigt ist aber die Aufnahme 4, die am oberen Ende zur Bildung eines Serviceraumes 5 oben erweitert ist, in welchem eine Zentrierung 6 eingesetzt ist.

Der herzustellende Behälter 1 ist hier als PET-Flasche gezeigt, die mit ihrem offenen Ende 7 kopfüber nach unten angeordnet und in der Zentrierung 6 abgestützt und dichtend in der Aufnahme 4 gehalten ist.

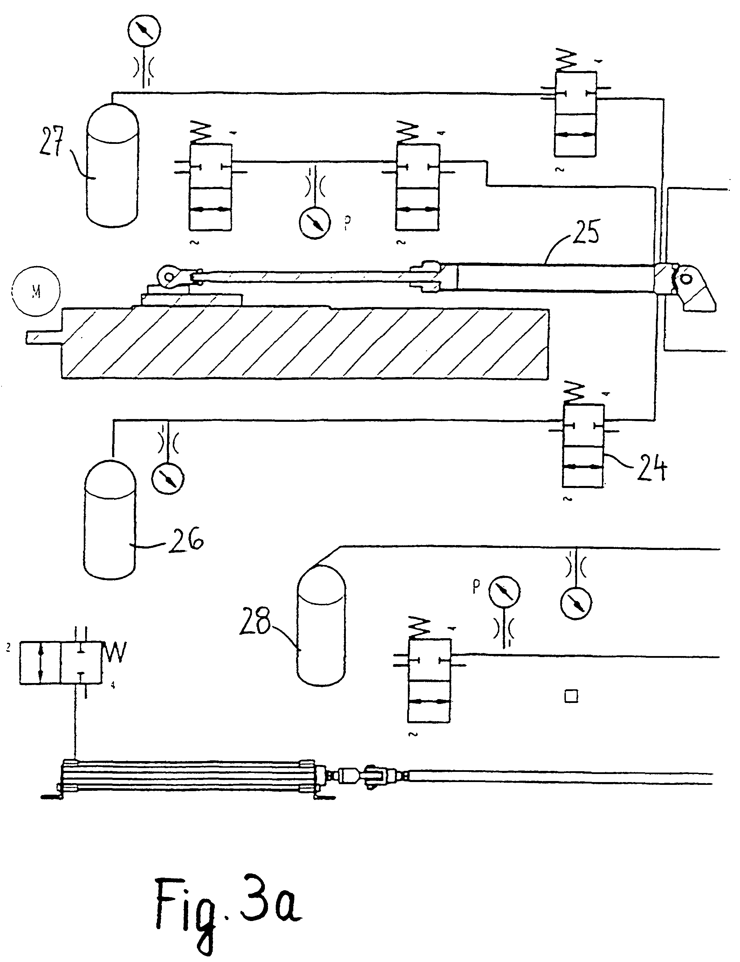

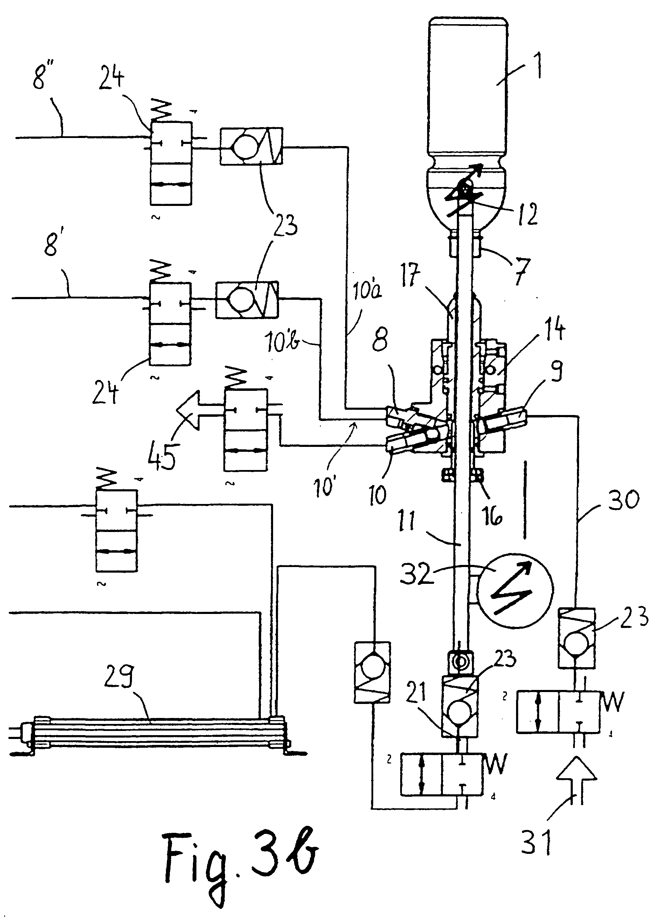

An der Aufnahme 4 sind axial je nach der Ausführungsform später näher beschriebene Leitungen vorgesehen, die mit der Aufnahme 4 verbindbar und von dieser auch so lösbar sind, daß die Aufnahme gegenüber den Leitungen und den diese tragenden Werkzeugteilen frei beweglich ist. Diese Leitungen ihrerseits sind mit einer in den Figuren 3a und 3b näher beschriebenen Dosiereinheit verbunden. In Figur 1 kann man die Leitungen 9 und 10 erkennen, deren Verbindung mit der Dosiereinheit in Figur 3b wiedergegeben ist. Dabei versteht es sich, daß in Abhängigkeit vom gewählten Ort der Gemischerzeugung - Dosiereinheit, Verteilerblock oder Vorformling - der Verteilerblock anstelle einer einzelnen Zuleitung 10 entsprechend Figur 1 auch mehrere Zuleitungen 10, 10' enthalten kann. Zur Prozeßkontrolle kann ein Drucksensor 8 im Verteilerblock dienen. Die zweite 10'a und dritte Zuleitung 10'b (die weiteren Zuleitungen 10') liegen in Figur 3b hinter dem Drucksensor 8.

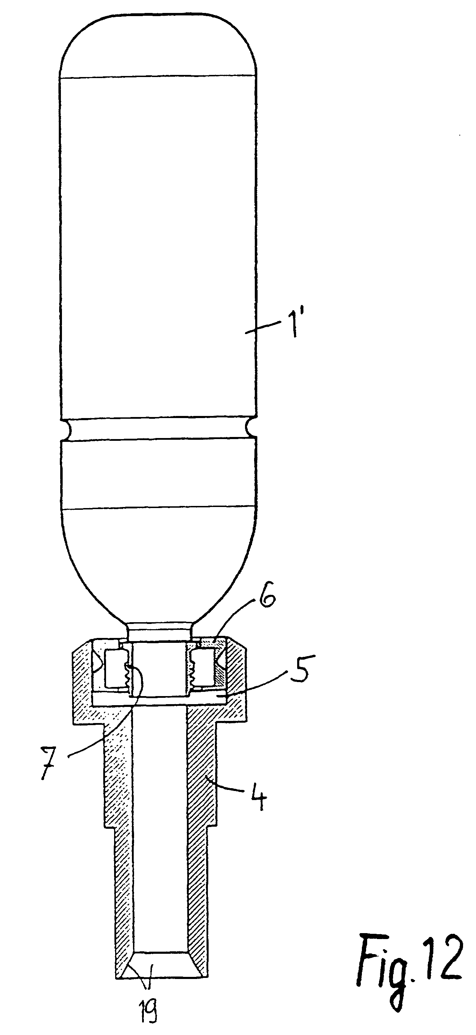

Zum Blasen und Strecken des Vorformlings in die geblasene Zwischenstufe bzw. Zwischenformstufe (zum Beispiel in Figur 12) wird in an sich bekannter Weise ein allgemein mit 11 bezeichneter Streckstempel verwendet, der axial beweglich durch die Aufnahme 4 geführt ist. Außerdem ist je nach der Ausführungsform der Vorrichtung an einer Stelle eine Zündeinrichtung 12 angeordnet, um ein explosives Gasgemisch innerhalb des Behälters 1' zu zünden. Heiz- und Kühleinrichtungen, auch die Kühleinrichtungen für den Streckstempel 11, sind zur Vereinfachung und Vergrößerung der Klarheit der Zeichnungen weggelassen worden.

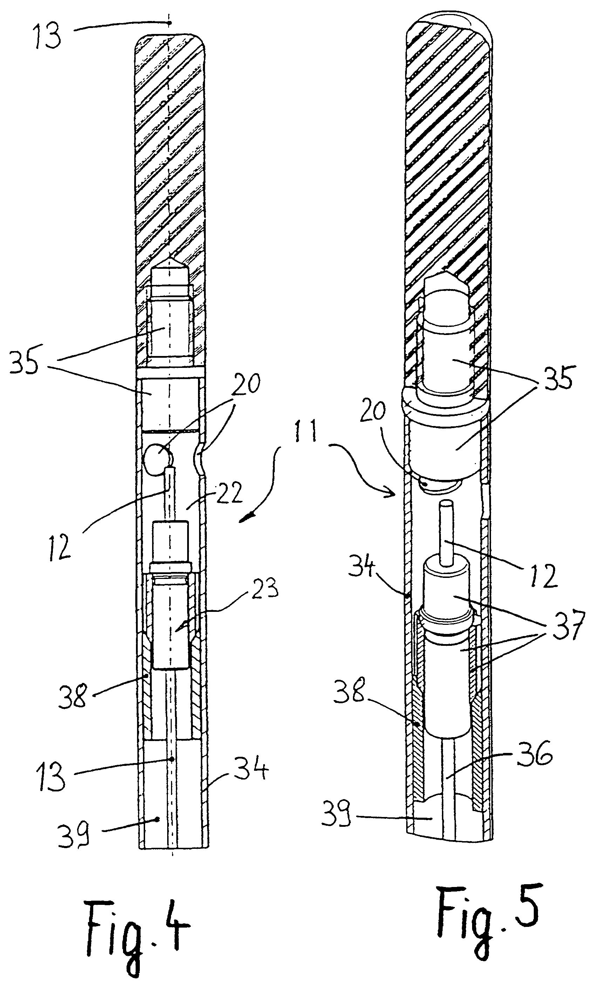

In den Figuren der hier gezeigten Ausführungsbeispiele erstrecken sich viele Teile der Vorrichtung, wie zum Beispiel auch der Streckstempel 11, in vertikaler Richtung von unten nach oben oder umgekehrt, wobei sich Aufbau und Funktion der Vorrichtung vereinfachen, wenn der herzustellende Behälter oben, die Aufnahme 4 dazwischen und die stationären Werkzeugteile unten angeordnet sind. In Richtung der in Figur 4 gestrichelt gezeichneten Längsmittelachse 13 erstreckt sich auch der Streckstempel 11 in der Vertikalen, mit welcher die Längsmittelachse 13 zusammenfallend zu denken ist. Diese Längsmittelachse verläuft auch mittig durch die Aufnahme 4 und den Vorformling 2 bzw. den späteren zwischengeformten Behälter 1' und den fertigen Behälter 1. Wenn die jeweilige Aufnahme 4 in Richtung quer zur Längsmittelachse 13 bewegbar ist, um die Vorformlinge 2 bzw. Behälter 1 zu transportieren, dann verläuft diese Transportrichtung gemäß Pfeil 3 in horizontaler Richtung, während die Längsmittelachse 13 vertikal liegt.

Die Aufnahme 4 ist an ihrem dem Behälter 1 bzw. dem Vorformling 2, der jeweils oben angebracht ist, abgewandten Ende, d.h. unten, fließmitteldicht mit einem Verteilerblock 14 in Eingriff bringbar. Dieser Verteilerblock 14 ist ortsfest und hat eine durchgehende vertikale Bohrung 15. in dieser sitzt unten eine dichtende Durchführung 16, durch welche der Streckstempel konzentrisch und dichtend geführt von außen in den Verteilerblock 14 und oszillierend nach oben und unten bewegbar ist. In sehr geringem Abstand über der dichtenden Durchführung 16 im Inneren des Verteilerblockes 14, vorzugsweise in einem Abstand zwischen 2 und 20 mm, befindet sich ein Hohlkolben 17, der relativ zu dem ortsfesten Verteilerblock 14 axial in der erwähnten Bohrung 15 und damit parallel zu der Längsmittelachse 13 bewegbar angetrieben ist. Im Abstand von den Innenwandungen des Hohlkolbens 17 verläuft der gegenüber den beschriebenen Teilen bewegliche Streckstempel 11, der axial in Flucht mit der Aufnahme in letztere und auch in den von dieser gehaltenen Vorformling 2 bzw. Behälter 1 eindringen kann.

Der Hohlkolben 17 hat an seinem oberen, nämlich dem äußeren Ende 18, welches der Aufnahme 4 zugewandt ist, eine zu letzterer passende, ringförmige Gegendichtfläche 18. Die hohle Aufnahme 4 weist an ihrem dem Behälter 1 bzw. dem Vorformling 2 abgewandten Ende (unten) eine ringförmige Dichtfläche 19 auf. Diese paßt zu der Gegendichtfläche 18 des Hohlkolbens 17 in solcher Weise, daß bei einer Bewegung des Hohlkolbens 17 aus der in Figur 1 gezeigten Position nach oben auf die Aufnahme 4 zu die Gegendichtfläche 18 in die Dichtfläche 19 hinein fährt und für eine passende, fließmitteldichte Verbindung sorgt. Mit anderen Worten ist durch die Dichtfläche 19 unten an der Aufnahme 4 und die Gegendichtfläche 18 oben an dem Hohlkolben 17 die Aufnahme 4 mit dem Verteilerblock 14 in fließmitteldichten Eingriff bringbar. Durch den durch die hohle Aufnahme 4und den Hohlkolben 17 gebildeten Hohlraum kann der Streckstempel 11 axial so hindurchgeführt werden, daß allen Werkzeugteilen die Längsmittelachse 13 gemeinsam ist.

Schon in Figur 1 und besonders deutlich in den Figuren 4 und 5 ist in dem Streckstempel 11 ein Loch 20 gezeigt, welches einer der Fließmittelanschlüsse ist, die über den ortsfesten Verteilerblock 14 angeschlossen sind. Bei einer Ausführungsform ist ein Fließmittelanschluß der Zugang 21 zu dem dann hohl ausgebildeten Streckstempel 11; oder bei einer anderen Ausführungsform sind Ffießmittelanschlüsse mit 9 oder 10 am Verteilerblock bezeichnet. An jedem Fließmittelanschluß sind zum Verschließen und Abdichten des vorrichtungsseitigen Innenraumes 22 Rückschlagventile 23 angebracht. Diese können je nach Ausführungsform unterschiedliche Ausgestaltung haben, wie teilweise nachfolgend noch erläutert wird. Der vorrichtungsseitige Innenraum 22 ist derjenige Raum im Werkzeug und im Vorformling 2 bzw. dem Behälter 1, in welchem die Explosion des Gasgemisches erfolgt.

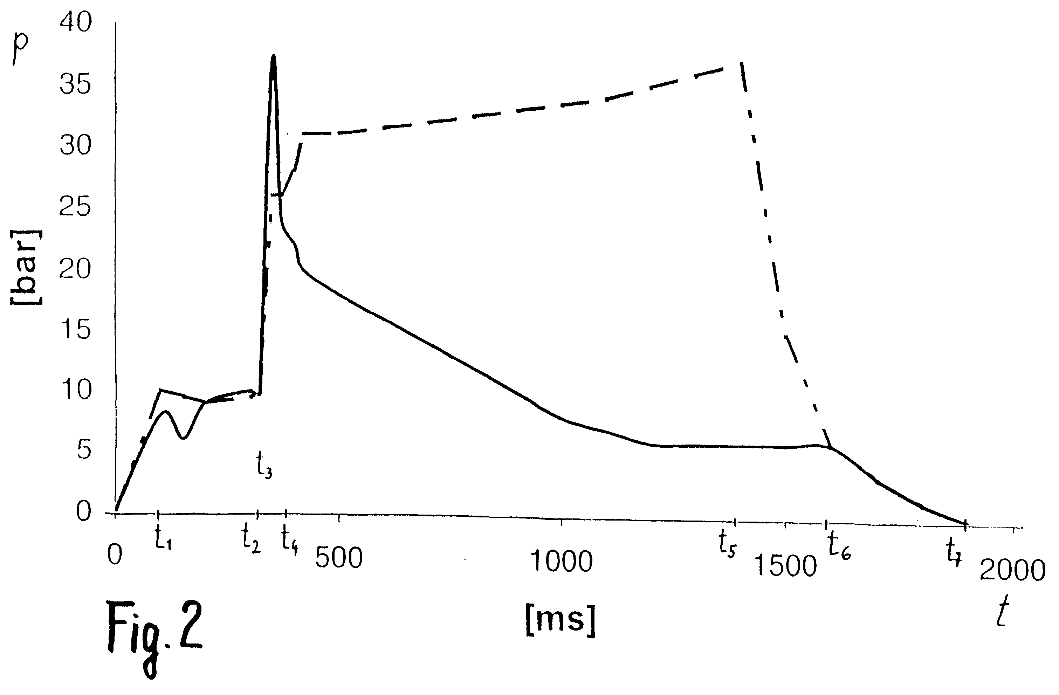

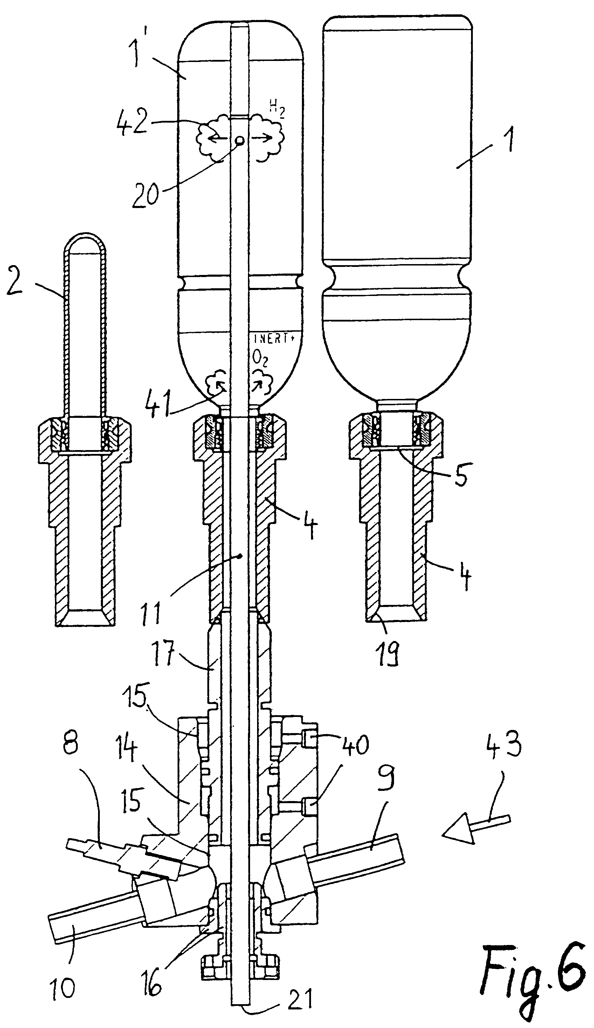

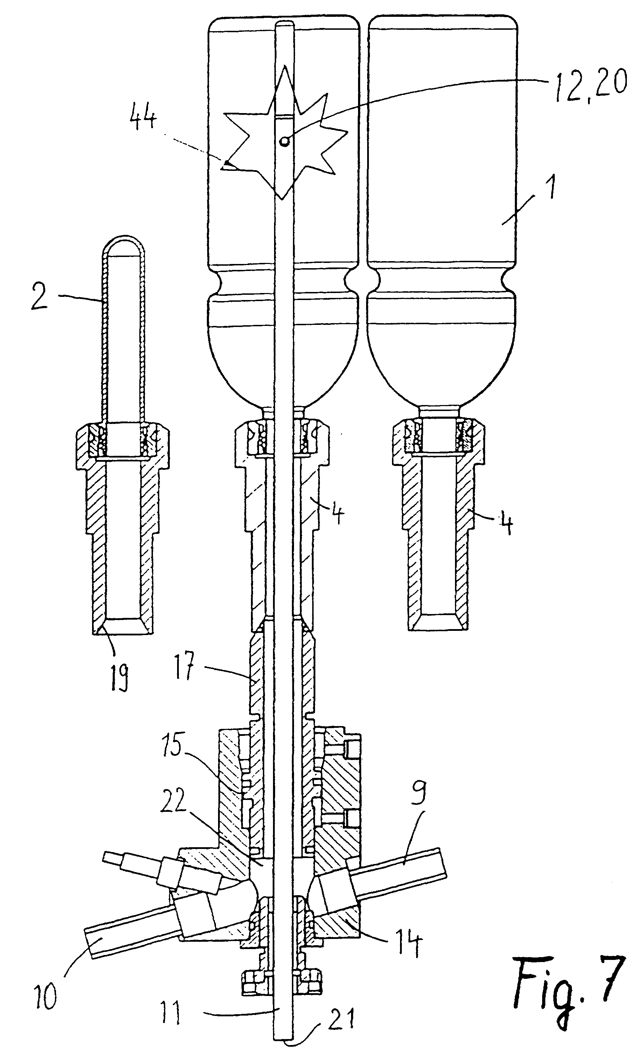

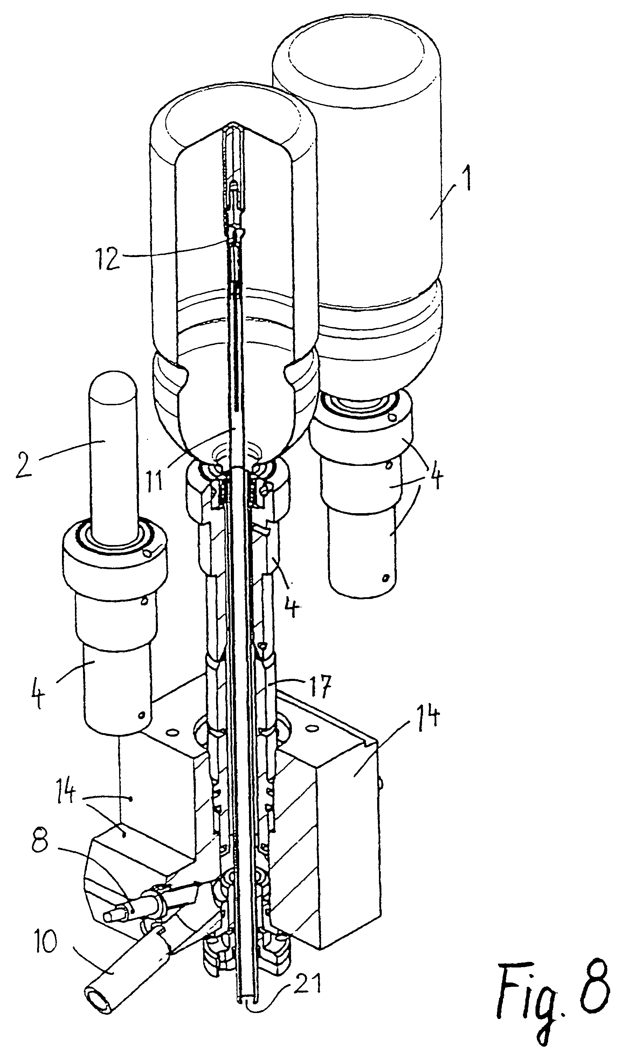

Das eigentliche Verfahren mit dem Zünden des explosiven Gemisches, bei der hier gewählten Ausführungsform eines Gasgemisches, läßt sich anhand Figur 2 gut erläutert. Über der Zeit t (in ms) ist der Druck (in bar) in dem vorrichtungsseitigen Innenraum 22 aufgetragen. Die strichpunktierte Linie zeigt das herkömmliche Verfahren. Bei t = 0 wird ein Gemisch von Wasserstoff, Sauerstoff und Inertgas durch die dafür vorgesehenen Fließmittelanschlüsse 9, 10, 21 eingeblasen, wie etwa in den Figuren 6 und 9 gezeigt ist, während der Streckstempel 11 aus dem Verteilerblock 14 durch die Aufnahme 4 nach oben hindurch in den Vorformling 2 so vorgeschoben wird, daß dieser in die Zwischenform des runder dargestellten Zwischenbehälters 1' gestreckt wird. Es versteht sich, daß der Vorformling 2 zuvor auf vorzugsweise 120°C erwärmt wurde. Zwischen der Zeit t₁ und t₂ wird der Innendruck im Bereich von etwa 5 - 10 bar (Streckdruck) gehalten, so daß der warme Vorformling 2 gestreckt wird und dabei auch sein Durchmesser zunimmt. Bisher wurde dann zur Zeit t₂. der Innendruck der nicht explosiven Gase auf gut 30 bar erhöht und bis zur Zeit t₅ gehalten, wodurch der Vorformling 2 bzw. der zwischengeformte Behälter 1' ganz gegen die Werkzeugform gepreßt wird und dadurch die endgültige Form des herzustellenden Behälters 1, zum Beispiel der PET-Flasche, erhält. Dann wird entlüftet, die Form wurde inzwischen gekühlt, der fertige Behälter wurde nach der Zeit t₇ der Form entnommen.

Bei dem neuen Verfahren mit dem explosiven Gemisch, zum Beispiel Knallgas, erfolgt zwar das Strecken und Blasen durch den erhöhten Innendruck bis zur Zeit t₂ in gleicher Weise. Danach allerdings wird das Knallgas gezündet, weshalb sich der Druck bis zur Zeit t₃ auf über 35 bar kurzzeitig erhöht und bis zur Zeit t₄ wieder unter 20 bar abfällt. Ein Inertgas oder ein anderes an dem Gemisch physikalisch beteiligtes, nicht aber an den chemischen Reaktionen beteiligtes Gas, wird zwischen den Zeiten t₄ und t₆ mit Druck in den Innenraum 22 eingeführt bzw. dort unter Druck gehalten, um die Innenwandung des gerade hergestellten Behälters 1 an der Innenwand der Form zu halten und ein Abkühlen und Erhärten des Kunststoffmaterials zu gewährleisten. Nach der Zeit t₆ wird entspannt, und bei t₇ kann der Behälter 1 dem Werkzeug entnommen werden.

Anhand der Figuren 3a und 3b ist eine erste Ausführungsform der Dosiereinheit beschrieben. Dem in Figur 3b rechts gezeigten Verteilerblock 14 wird bei der hier gezeigten Ausführungsform über die Zuteilung 10'a oder die Zuelitung 10'b ein Gasgemisch zugeführt. Dieses kann über das jeweilige Rückschlagventil 23 und das jeweils mit 24 bezeichnete Ventil über die Leitung 8' oder die Leitung 8" von einem Misch- und Druckzylinder 25 (Figur 3a) erfolgen. Letzterer ist über den Motor M angetrieben und kann je nach der Stellung der Ventile 24 verschiedene Gase mischen und durch die Leitung 10'a und/oder 10'b der weiteren Zuleitung 10' zuführen. Bei der hier angenommenen bevorzugten Ausführungsform enthält der Gasbehälter 26 ein Gemisch aus Argon und Sauerstoff (alternativ bei einer anderen Ausführungsform zum Beispiel auch Luft). Der Gasbehälter 27 enthält Argon. Über den Misch- und Druckzylinder 25, der zum Beispiel ein Volumen von 2 Litern haben kann, kann wunschgemäß Sauerstoff mit einem mehr oder weniger großen Anteil Argon vermischt und dann der Zuleitung 8 zugeführt werden.

Damit Knallgas als explosives Gasgemisch entstehen kann, wird gemäß Figuren 3a und 3b im Gasbehälter 28 Wasserstoff gelagert. Dieser wird über einen Druckzylinder 29 mit einem Volumen von zum Beispiel 0,8 Liter auf einen Druck einmal von 2,5 bar vorkomprimiert und auf einen Streckdruck von 10 bar nachkomprimiert. Aus Sicherheitsgründen sind vor dem Fließmittelanschluß 21 in den Streckstempel 11 weitere Rückschlagventile 23 eingeschaltet.

Alternativ kann man, um die Lagerung größerer Mengen Wasserstoff zu vermeiden und damit die Sicherheit der Anlage weiter zu erhöhen, den benötigten Wasserstoff zum Beispiel auch kontinuierlich in den jeweils benötigten kleinen Mengen parallel in einer Elektrolyseeinheit erzeugen.

Über die nicht mit der Dosiereinheit verbundene Zuleitung 9 wird durch die Leitung 30 ein Spülgas in Richtung des rechts unten in Figur 3b gezeigten Pfeiles 31, wiederum über ein Rückschlagventil 23, in den Verteilerblock 14 eingeführt. Dieses Spülgas ist bei dieser Ausführungsform Preßluft und dient dazu, Wasser und Gasreste aus dem System nach der Explosion auszudrücken.

In Figur 3b ist rechts unten der im Kreis gezeichnete gezackte Pfeil das Symbol für die Hochspannungserzeugung 32. Die Hochspannung führt dann in der weiter oben liegenden Zündeinrichtung 12 zur Zündung der Explosion.

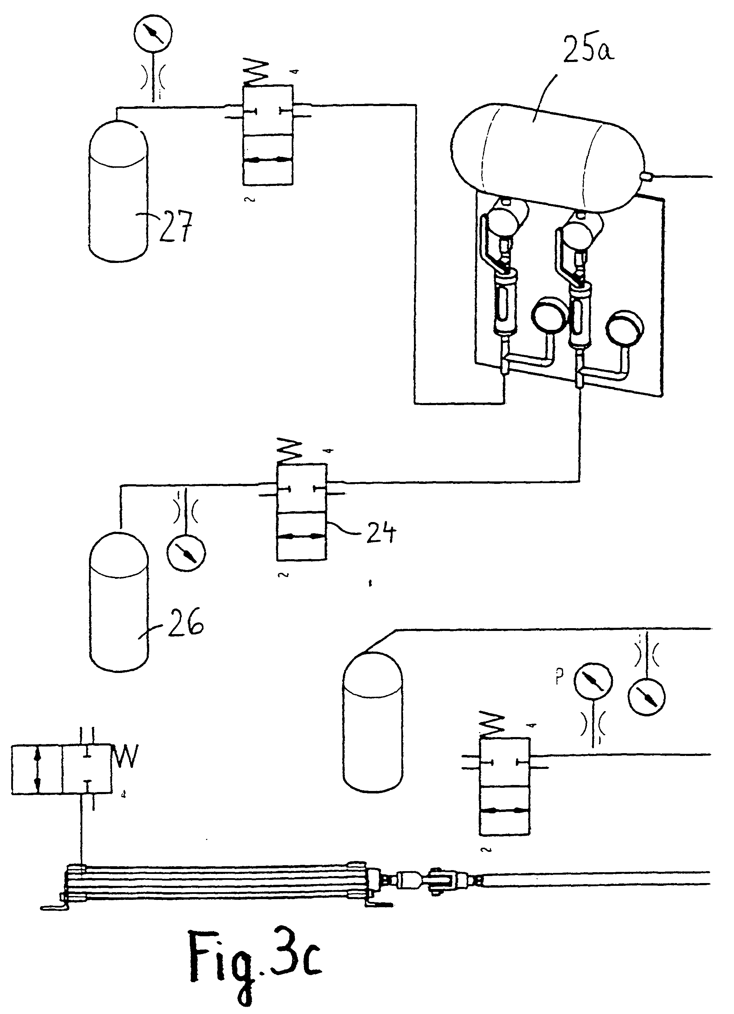

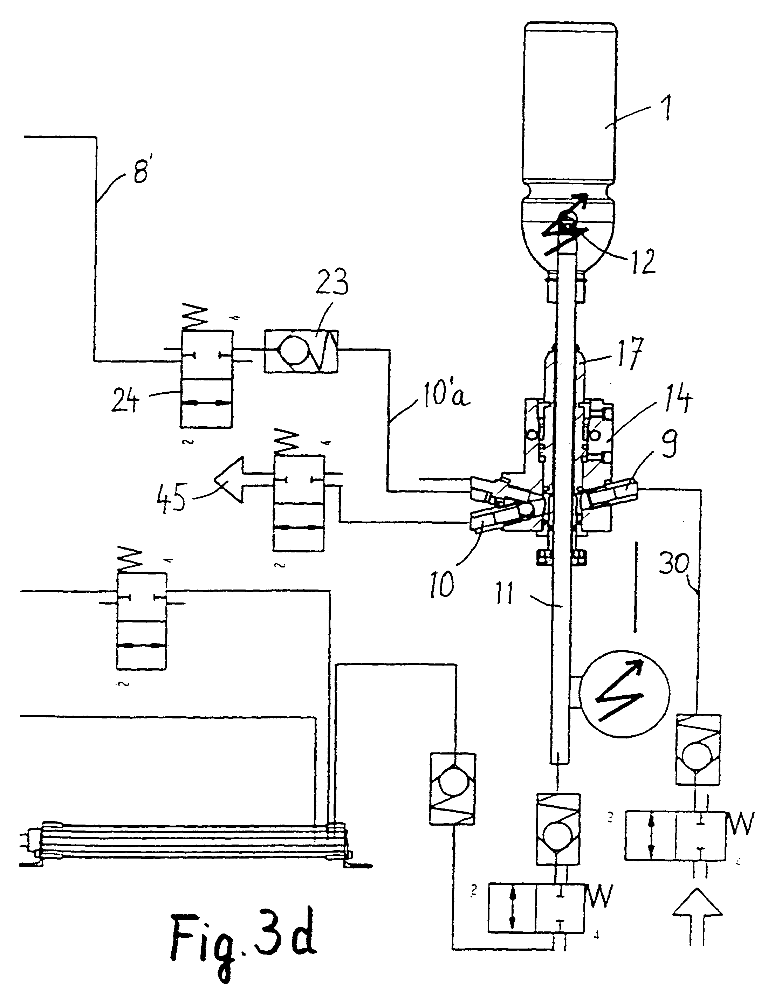

Die Figuren 3c und 3d beschreiben eine zweite andere Ausführungsform einer Dosiereinheit. Die Dosiereinheit nach den Figuren 3c und 3d ist sehr ähnlich der nach den Figuren 3a und 3b aufgebaut, weshalb gleiche Teile mit gleichen Begriffen und Bezugszahlen zu verstehen sind. Anders ist der in Figur 3c gezeigte Drucktank 25a, von welchem nur noch eine Zuleitung 8' über das Ventil 24 zu dem Rückschlagventil 23 und von dort als Zuleitung 10 a zu dem,Verteiler 14 führt.

Die erste Ausführungsform nach den Figuren 3a und 3b kann zum Erreichen der Ausführungsform nach den Figuren 3c und 3d so modifiziert werden, daß bei Vorformdrucken unter 10 bar der Misch- und Druckzylinder 25 mit seinen Zu- und Ableitungen durch den erwähnten Drucktank 25a ersetzt ist. In diesem werden die Gase gemischt, zum Beispiel die aus den Gasbehältern 26 (Argon und Sauerstoff) und 27 (Argon) kommenden und zum Drucktank 25a geführten Gase. Von diesem Drucktank 25a führt dann nur noch eine Zuleitung 8' zu dem Verteilerblock 14, wie in Figur 3d gezeigt ist. Anstelle des Misch- und Druckzylinders 25 der Figur 3a kann bei der zweiten Ausführungsform der Figur 3c Sauerstoff wunschgemäß mit einem mehr oder weniger großen Anteil Argon in dem Druckzylinder 25a gemischt und dann dem Verteiler über die Zuleitung 10'a zugeführt werden.

In den Figuren 4 und 5 ist das obere bzw. behälterseitige Ende des hohl ausgebildeten Streckstempels 11 dargestellt. Ganz oben befindet sich eine aus Kunststoff bestehende Streckspitze 33, die bei anderen Ausführungsformen auch aus Stahl oder Keramik bestehen kann. Bei der hier gezeigten Ausführungsform ist Kunststoff gewählt, damit sich die für das Strecken des Behälters 1' eingesetzte Spitze nicht zu stark erwärmt. Durch die fortlaufend und diskontinuierlich arbeitende Zündeinrichtung 12 erwärmt sich nämlich der Streckstempel 11, der in seinem wesentlichen Teil unter der kappenförmigen Streckspitze 33 ein Stahlrohr 34 ist. Die Streckspitze 33 ist über den Halter 35 mit dem Stahlrohr 34 verschraubt. In geringem Abstand unter dem Halter 35 befinden sich Löcher 20 in dem Stahlrohr 34, die als Fließmittelaustritt in Lochstruktur dienen. Das Fließmittel soll aus dem länglichen, vorrichtungsseitigen Innenraum 22 aus dem hohlen Streckstempel 11 durch die Löcher 20 austreten können. Der vorrichtungsseitige Innenraum 22 ist bei dieser Ausführungsform ein länglicher Innenkanal, der sich parallel zur Längsmittelachse 13 vom Rückschlagventil 23 bis zur Höhe der Löcher 20 erstreckt.

Die Zündeinrichtung 12 weist in der Darstellung der Figuren 4 und 5 eine Zündkerze auf, die ebenfalls parallel zur Längsmittelachse 13 liegt und im Bereich der Löcher 20 nach oben hin endet. Nach unten hin schließt sich das Rückschlagventil 23 an. Die Zündeinrichtung 12 ist bezüglich des Rückschlagventiles 23 also oben, d.h. auf der den Löchern 20 zugewandten Seite angeordnet. Auf der den Löchern 20 abgewandten Seite des Rückschlagventiles 23 ist ein Kabel 36 angeschlossen, welches aus dem Rückschlagventil 23 parallel zur Längsmittelachse 13 nach unten herausgeführt ist, wie man deutlich in Figur 5 sieht. Dieses Kabel 36 ist mit einer nicht gezeigten Steuereinheit elektrisch verbunden, um die Explosion in jedem gewünschten Augenblick zünden zu können.

Das Rückschlagventil 23 in dem hohlen Streckstempel 11 weist einen beweglichen Ventilkörper 37 auf. Dieser Ventilkörper 37 kann fließmitteldicht gegen einen innen am Stahlrohr 34 ortsfest angebrachten Dichtsitz 38 aufgelegt werden. Man versteht aus den Figuren 4 und 5, daß bei einer Zündung eines Gasgemisches in dem vorrichtungsseitigen Innenraum 22 (oberhalb des beschriebenen Innenkanals 39 in dem hohlen Streckstempel 11) der Überdruck den Ventilkörper 37 vertikal nach unten gegen den Dichtsitz 38 drückt und damit die Funktion des Rückschlagventiles 23 auslöst.

Bei hier nicht dargestellten Ausführungsformen kann der Ventilkörper 37 Verwirbelungsmittel tragen, zum Beispiel Verwirbelungsschaufeln wie Äste an einem Tannenbaum oder alternativ spiralförmig angeordnete Gasauslässe. Dadurch kann man die Verwirbelung des Gasgemisches beim Austritt aus dem Streckstempel 11 weiter verbessern.

Während in Figur 1 der Verteiler von der Aufnahme getrennt dargestellt ist, damit nämlich die Aufnahme 4 senkrecht zu der Längsmittelachse 13, nämlich in Richtung des Pfeiles 3 (horizontal), von einer Station (links) in die nächste (Mitte oder rechts) relativ zu dem Verteiler 14 bewegt werden kann, ist in Figur 6 die Verbindung des Verteilers 14 bzw. seines Hohlkolbens 17 mit der Aufnahme 4 dargestellt. Figur 6 veranschaulicht einen bestimmten Betriebszustand. Um diese gasdichte Verbindung zwischen Aufnahme 4 und Verteiler 14 bzw. seinem Hohlkolben 17 zu schaffen, ist der Hohlkolben 17 vertikal in Richtung der Längsmittelachse nach oben und unten bewegbar. In dieser Richtung ist die Aufnahme 4 nicht bewegbar, und der Verteiler 14 ist ohnehin ortsfest. Führt man über den unteren pneumatischen Anschluß 40 Druckluft in den Zylinder innerhalb der durchgehenden vertikalen Bohrung 15 ein, dann bewegt sich der Hohlkolben 17 nach oben in die in Figur 6 gezeigte Position. (Umgekehrt kann man in den oberen pneumatischen Anschluß 40 Druckluft einführen, um den Hohlkolben 17 wieder nach unten in die in Figur 1 gezeigte Position zu bewegen.)

Um den Betriebszustand der Figur 6 zu erreichen, wird ein Gemisch aus Argon als Inertgas plus Sauerstoff aus dem Gasbehälter 26 durch die Zuleitung 8 in den Raum um den Streckstempel 11 herum eingeführt und in den zunächst noch als Vorformling (erwärmt) vorhandenen Raum eingedrückt, wie die Fluidpfeile 41 in Figur 6 zeigen. Während dieses Aufblasens wird auch der Streckstempel 11 vertikal so nach oben gegen den Boden des Vorformlings 2 gedrückt, daß der Innendruck plus der mechanische Druck des Streckstempels 11 das erweichte Kunststoffmaterial des Vorformlings aufblasen in die Zwischenform des Behälters 1' gemäß Figur 6. Unterstützend hilft dabei die Zufuhr von Wasserstoffgas, welches über den Fließmittelanschluß 21 unten im Streckstempel 11 zugeführt und durch den (in den Figuren 4 und 5 gezeigten) Innenkanal 39 nach oben zu den Löchern 20 gedrückt wird, wo der Wasserstoff gemäß den Wasserstoffpfeilen 42 in das Volumen des Zwischenbehälters 1' strömt. Das Material des Vorformlings 2 legt sich in Form des Zwischenbehälters 1'mehr oder weniger an die nicht gezeigte innere Oberfläche des Formwerkzeuges an, wobei mit Hilfe der Gase (41, 42) und des Streckstempels 11 ein Blasen und Strekken erfolgt.

Selbstverständlich ist es auch möglich, das Gemisch aus Inertgas und Sauerstoff in Richtung des weiteren Pfeiles 43 (Gasgemischeinlaß) durch die Zuleitung 9 in den Verteilerblock 14 zu drükken, so daß es bei den Fluidpfeilen 41 in derselben Weise wie oben beschrieben in das aufzublasende Volumen eintritt. Dies war das Vorstrecken und Formen.

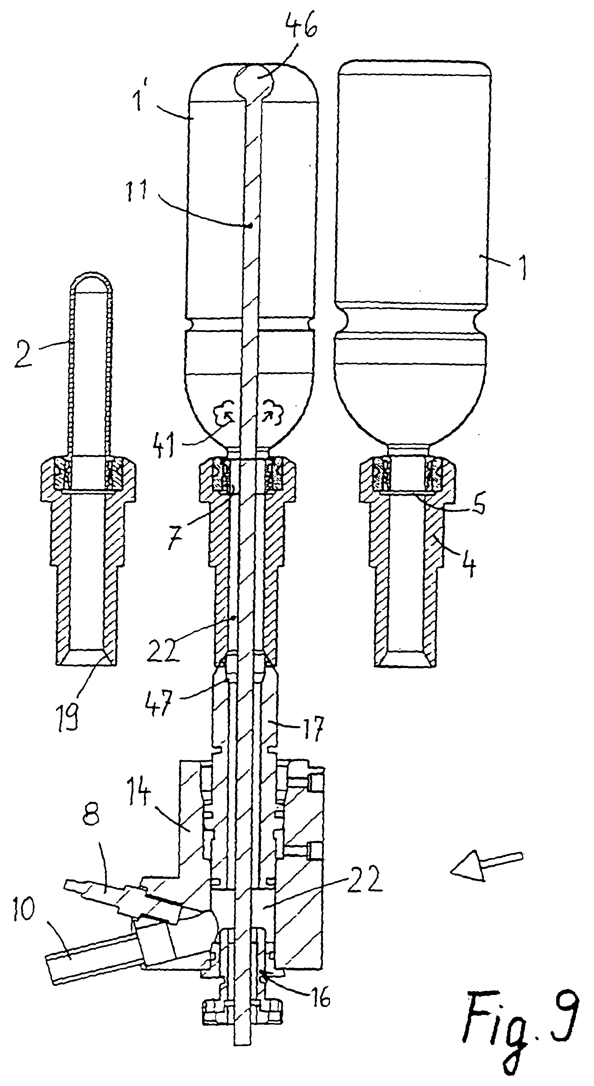

Der nächste Betriebszustand läßt sich gut anhand von Figur 7 erläutern. Hier wird nun durch Explosion geformt. Hinter den Löchern 20 in dem hohlen Streckstempel 11 befindet sich die Zündeinrichtung 12, die durch ihr Kabel 36 das Signal zur Zündung erhält, wenn das Vorstrecken und Formen abgeschlossen und die Zwischengestalt des Behälters 1' erreicht ist. Durch die Zündung, welche in Figur 7 oben durch den unsymmetrischen Stern 44 (Zündung) angedeutet ist, wird aus dem Gasgemisch von Sauerstoff und Wasserstoff über die Knallgasexplosion Wasser gebildet nach der Formel 2H₂ + O = 2H₂O. Gemäß Figur 2 ist im Zeitpunkt t₂ bis zur Zeit t₃ kurzzeitig ein sehr hoher Druck von über 35 bar erzeugt worden. Dieser Gasdruck sorgt für ein Anlegen der noch warmen Kunststoffwandungen an die innere Oberfläche der Form, so daß die Gestalt des fertigen Behälters 1 entsteht, wie in Figur 7 gezeigt ist. In diesem Zustand befindet sich der Streckstempel 11 in seiner nach oben herausgeschobenen Position. In dieser Stellung liegen die Löcher 20 mit der dahinter befindlichen Zündeinrichtung 12 gut mittig im Volumen des auszuformenden Behälters 1. Nicht nur der Druck sorgt für ein gutes Ausformen des Behälters 1, sondem es tritt auch eine kurzzeitige Temperaturerhöhung auf, so daß der Innenraum des Behälters 1 gleichzeitig sterilisiert wird.

Damit man die Ausgestaltungen und Abmaße besser einschätzen kann, sind gleiche Darstellungen in Figur 8 perspektivisch und teilweise abgeschnitten wiedergegeben. Damit in dem vorrichtungsseitigen Innenraum 22 durch die Knallgasexplosion entstandenes Wasser nach dem Formen entlüftet und abgeführt werden kann, ist die schräg nach unten außen führende Leitung 10 vorgesehen, welche zum Auslaß 45 gemäß Pfeil in Figur 3b führt. Ergänzend kann das Spülgas aus der Leitung 30 über die Zuleitung 9 zum Austreiben von Wasser und anderen Gasresten unterstützend dienen.

Es versteht sich von selbst, daß es zur Erzielung geringerer Betriebskosten günstig ist, das an der chemischen Reaktion unbeteiligte Argon nach Formung des Behälters nicht einfach abzublasen, sondern vielmehr in einer Rückgewinnungsanlage zu reinigen, trocknen und erneut zu verwenden.

Anhand Figur 8 kann man sich vorstellen, daß der Hohlkolben 17 nach der Entlüftung in Richtung der Längsmittelachse 13 vertikal nach unten bewegt wird, so daß die ringförmige Dichtfläche 19 an der Aufnahme unten von der Gegendichtfläche 18 am äußeren Ende des Hohlkolbens 17 so abgehoben wird, daß wieder der Zustand der Figur 1 erreicht ist. Jetzt kann mit Hilfe der nicht gezeigten horizontalen Fördereinrichtung die Aufnahme 4 mit dem neu geformten Behälter 1 in Richtung des Pfeiles 3 horizontal aus der mittleren in die in Figur 8 rechts oben, hinten gezeigte Position bewegt werden. Gleichzeitig wird die links vorn gezeigte Aufnahme 4 mit dem Vorformling 2 in die mittlere Position gebracht, so daß wieder der Zustand der Figur 1 erreicht ist.

Eine andere Ausführungsform ist in Figur 9 dargestellt. Hier ist der Streckstempel 11 nicht hohl sondern massiv ausgestaltet. An seinem oberen äußeren, freien Ende ist er mit einer Kugel 46 versehen. Zum Vorstrecken und Formen bei Figur 9 wird ähnlich wie bei Figur 6 Inertgas, Sauerstoff und hier sogar Wasserstoff von unten von dem offenen Ende 7 des Behälters 1' um den Streckstempel 11 herum innerhalb des Hohlkolbens 17 und der Aufnahme 4 vertikal nach oben von einer hier mit 10 bezeichneten Zuleitung herein und entsprechend der Fluidpfeile 41 in den warmen Vorformling 2 derart geblasen, daß unter Zuhilfenahme des Streckstempels 11 mit seiner (an der Spitze befindlichen) Kugel 46 die Zwischenform des Behälters 1' gebildet wird.

Bei der Ausführungsform der Figur 9 werden die Rückschlagventile 23 tätig, um den gesamten vorrichtungsseitigen Innenraum bis in den Verteilerblock 14 hinein nach außen zu schließen. Dann nämlich kann die bei dieser Ausführungsform in dem Verteilerblock 14 angebrachte Zündeinrichtung 12, die zum Beispiel am Platz der mit 8 bezeichneten Zuleitung angeordnet sein könnte, das Knallgasgemisch in dem gesamten vorrichtungsseitigen Innenraum 22, vom Verteilerblock 14 unten bis oben in den Raum des noch in Zwischenform befindlichen Behälters 1' zur Explosion bringen. Auch in Figur 9 ist das Vorstrecken und Formen gezeigt.

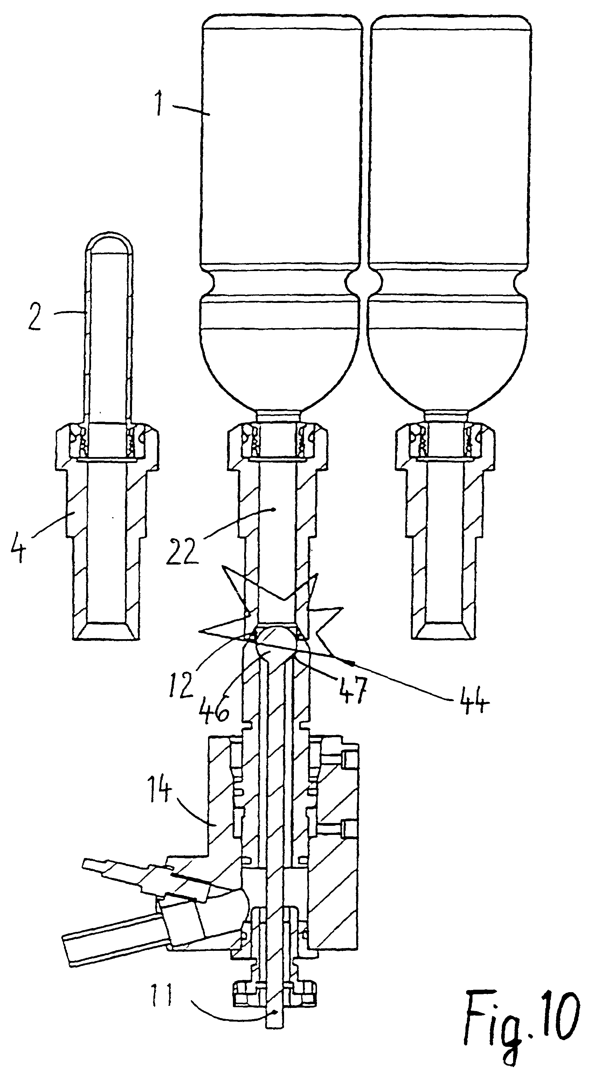

Eine andere, ähnliche Ausführungsform ist in Figur 10 gezeigt, die ähnlich aufgebaut ist wie Figur 9, wobei allerdings die Zündeinrichtung 12 oberhalb und im Bereich der Gegendichtfläche 18 des äußeren Endes des Hohlkolbens 17 angeordnet ist. Die durch den Zündungsstern 44 symbolisierte Explosion wird dann ausgelöst, wenn der Streckstempel 11 sich in seiner unteren, zurückgezogenen Position befindet. Dann nämlich steht die äußere Dichtfläche der Kugel 46 mit einem Dichtsitz 47 im Hohlkolben 17 in Eingriff. Der vorrichtungsseitige Innenraum 22 befindet sich bei dieser Ausführungsform praktisch nur im Bereich der Aufnahme 4, und die Kugel 46 mit dem Dichtsitz 47 im Hohlkolben 17 dient als Rückschlagventil 23.

In Figur 9 ist zwar auch der Dichtsitz 47 im Hohlkolben 17 oben gezeigt, im Falle der Figur 9 müßte dann aber die Zündeinrichtung aus dem Bereich des Verteilerblockes 14 herausgenommen und nach oben in den Bereich der Aufnahme 4 genommen werden.

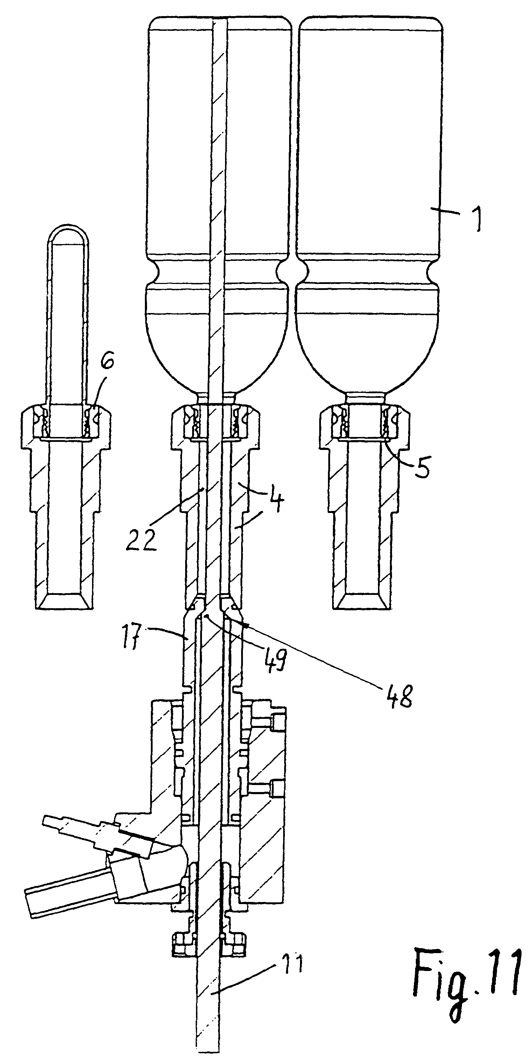

Eine weitere andere Ausführungsform ist in Figur 11 gezeigt. Wiederum ist der Hohlkolben 17 an seinem der Aufnahme 4 zugewandten Ende mit einem Dichtsitz 48 versehen, der eine ähnliche Funktion hat wie der Dichtsitz 47 im Hohlkolben 17 bei der Ausführungsform nach den Figuren 9 und 10. Bei den Figuren 9 und 10 tritt dieser ringförmige Dichtsitz 47, der sich kegelstumpfförmig vertikal nach unten verjüngt, mit der radialen Erweiterung, d.h. der Kugel 46 in Eingriff, die auch als Kegel, Ring oder dergleichen ausgestaltet sein kann. Die Kugel 46 war gemäß den Figuren 9 und 10 ganz am freien oberen Ende des Streckstempels 11 angebracht.

Bei der Ausführungsform der Figur 11 hingegen tritt mit dem ringförmigen Dichtsitz 48 im Hohlkolben 17, welcher sich kegelstumpfförmig vertikal nach oben verjüngt, eine Schulter 49 an dem massiv ausgebildeten Streckstempel 11 in Eingriff. Diese Schulter 49 befindet sich weit unterhalb des freien oberen Endes des Streckstempels. Der Abstand vom oberen freien Ende des Streckstempels 11 ist etwa gleich der Länge des herzustellenden Behälters 1 plus der Länge der Aufnahme 4, beide vertikal in Richtung der Längsmittelachse 13 gemessen. Der Streckstempel 11 kommt also über seine Schulter 49 mit dem ringförmigen Dichtsitz 48 im Hohlkolben 17 nach Figur 11 dann in Eingriff, wenn der dünnere Teil des Streckstempels 11 oberhalb der Schulter 49 ganz nach oben in den herzustellenden Behälter 1 hochgeschoben ist. Dann kann sich die Schulter 49 auf den Dichtsitz 48 legen und den vorrichtungsseitigen Innenraum 22, welcher das Volumen in der Aufnahme 4 plus das Volumen in dem herzustellenden Behälter 1 ausmacht, nach außen abdichten. Schon der Ringraum in dem Hohlzylinder 17 und in dem Verteilerblock 14 außerhalb des unteren, dickeren Teils des Streckstempels 11 mit dem größeren Durchmesser wird im Falle der Zündung des Knallgases nicht mit dem hohen Druck und der hohen Temperatur beaufschlagt. Der Vorteil der Ausführungsform der Figur 11 gegenüber der der Figur 10 besteht darin, daß die Zündung durch eine in Figur 11 nicht gezeigte Zündeinrichtung, die zum Beispiel im Bereich der Aufnahme angeordnet ist, die Explosion auslösen kann, während der Streckstempel 11 noch in seiner vorgeschobenen "Streckposition" ausgefahren ist. Es wird also die Zeit zum Zurückziehen des Streckstempels 11 vertikal nach unten eingespart.

Bei beiden Ausführungsformen nach den Figuren 9 und 10 einerseits und auch nach Figur 11 andererseits ist der Streckstempel 11 massiv, d.h. nicht hohl ausgebildet. Bei beiden Ausführungsformen ist der vorrichtungsseitige Innenraum 22 durch die radiale Erweiterung (Kugel 46 oder Schulter 49) nach außen verschließbar, ohne daß ein Rückschlagventil zusätzlich angeordnet sein müßte.

Der weitere Vorteil bei der Ausführungsform nach den Figuren 9 und 10 liegt darin, daß der Durchmesser des Streckstempels 11 im Verhältnis zu dem Streckstempel der hohlen Ausführungsform sehr klein sein kann mit der Folge, daß ein großer freier Querschnitt in Form des Ringraumes um den Streckstempel 11 herum für das Einblasen von Fluid (Gasgemischen) zur Verfügung steht. Dadurch gewinnt man Zeit, weil der vorrichtungsseitige Innenraum 22 schneller mit dem gewünschten Fluid befüllt werden kann. Vorteilhaft ist es auch, daß der Streckstempel 11 bei der Ausführungsform nach den Figuren 9 und 10 weniger warm wird, weil nur ein kleinerer Teil desselben sich im Explosionsbereich befindet.

In Figur 12 erkennt man deutlich das Außengewinde des offenen Endes 7 des Behälters 1', weiches später nach dem Befüllen durch eine Kappe verschließbar ist. Es ist häufig erwünscht, die Kappe und insbesondere ihre Innenbereiche, einschließlich des Gewindes, steril zu halten. Dabei ist es günstig, wenn auch das Außengewinde an dem offenen Ende 7 des Behälters 1' sterilisiert ist. Dieses Sterilisieren erfolgt durch die kurzzeitige Erhitzung bei der Explosion des Knallgases, wobei auch in dem Serviceraum 5 innerhalb der Zentrierung 6 sterilisierendes, heißes Gas auf das Außengewinde an dem offenen Ende 7 des Behälters 1' einwirkt. Bei entsprechender Größe und Konstruktion des Serviceraumes ist es dabei möglich, im gleichen Arbeitsgang darin auch den später zum Verschließen des Behälters verwendeten Verschluß zu sterilisieren.

### Bezugszeichenliste

- 1: Behälter
- 1': teilgeformter Behälter bzw. Zwischenformling
- 2: Vorformling
- 3: Pfeil
- 4: Aufnahme
- 5: Serviceraum
- 6: Zentrierung
- 7: offenes Ende des Behälters
- 8: Drucksensor
- 8', 8": Zuleitung
- 9: Zuleitung
- 10, 10', 10'a, 10'b: Zuleitungen
- 11: Streckstempel
- 12: Zündeinrichtung
- 13: Längsmittelachse
- 14: Verteilerblock
- 15: durchgehende vertikale Bohrung
- 16: dichtende Durchführung
- 17: Hohlkolben
- 18: Gegendichtfläche
- 19: ringfömige Dichtfläche
- 20: Loch
- 21: Fließmittelanschluß
- 22: vorrichtungsseitiger Innenraum
- 23: Rückschlagventil
- 24: Ventil
- 25: Misch- und Druckzylinder
- 26: Gasbehälter
- 27: Gasbehälter (Argon)
- 28: Gasbehälter (Wasserstoff)
- 29: Druckzylinder
- 30: Spülgasleitung
- 31: Pfeil
- 32: Hochspannungserzeugung
- 33: Streckspitze
- 34: Stahlrohr
- 35: Halter
- 36: Kabel
- 37: beweglicher Ventilkörper
- 38: Dichtsitz
- 39: Innenkanal
- 40: pneumatischer Anschluß
- 41: Fluidpfeil
- 42: H₂-Pfeil
- 43: Pfeil (Gasgemischeinlaß)
- 44: Stern (Zündung)
- 45: Auslaß
- 46: Kugel
- 47: Dichtsitz im Hohlkolben
- 48: Dichtsitz im Hohlkolben
- 49: Schulter

## Patentansprüche

1. Vorrichtung zur Herstellung von Behältern (1, 1') aus einem durch Streck-Blasen verformbaren Kunststoff mit einer Form, deren Innenraum dem fertigen Behälter (1) entspricht, der an seinem offenen Ende (7) von einer Aufnahme (4) gehalten ist, wobei mit einer Dosiereinheit verbundene Leitungen (9, 10) an der Aufnahme (4) vorgesehen sind, ein beweglicher Streckstempel (11) axial durch die Aufnahme (4) geführt ist und eine Zündeinrichtung (12) angeordnet ist, um ein explosives Gasgemisch innerhalb des Behälters (1') zu zünden, und wobei Heiz- und Kühleinrichtungen vorgesehen sind, **dadurch gekennzeichnet, daß** die Aufnahme (4) an ihrem dem Behälter (1) abgewandten Ende fließmitteldicht mit einem Verteilerblock (14) in Eingriff bringbar ist, durch welchen der Streckstempel (11) in axialer Verlängerung der Aufnahme (4) beweglich hindurchgeführt ist und an welchem wenigstens ein Fließmittelanschluß (9, 10, 21) angebracht ist, daß der vorrichtungsseitige Innenraum (22) im Bereich des wenigstens einen Fließmittelanschlusses (9, 10, 21) zum Abdichten verschließbar ist, daß die Zündeinrichtung (12) in dem vorrichtungsseitigen Innenraum (22) angebracht ist, daß der Streckstempel (11) hohl ausgestaltet ist, mit wenigstens einer an einer Streckspitze (33) angeordneten Austrittsöffnung (20) und mit wenigstens einem die Austrittsöffnung (20) und den Fließmitteleinlaß (21) verbindenden Innenkanal (39) versehen ist und daß vorzugsweise ein Verschließmittel zum Abdichten des vorrichtungsseitigen Innenraumes (22) im Bereich der Austrittsöffnung (20) angebracht ist.

2. Vorrichtung nach Anspruch 1, **dadurch gekennzeichnet, daß** die Aufnahme (4) hohl ist und an ihrem dem Behälter (1) abgewandten Ende eine ringförmige Dichtfläche (19) aufweist, durch welche der Streckstempel (11) in axialer Verlängerung der Aufnahme (4) beweglich hindurchgeführt ist.

3. Vorrichtung nach Anspruch 1 oder 2, **dadurch gekennzeichnet, daß** das Verschließmittel zum Abdichten des vorrichtungsseitigen Innenraumes (22) ein Rückschlagventil (23) ist.

4. Vorrichtung nach einem der Ansprüche 1 bis 3, **dadurch gekennzeichnet, daß** im Bereich der Austrittsöffnung (20) eine Zündeinrichtung (12) in dem hohlen Streckstempel (11) auf der der Austrittsöffnung (20) zugewandten Seite des Rückschlagventiles (23) angebracht und vorzugsweise über in dem hohlen Streckstempel (11) verlaufende Kabel (36) mit einer Steuereinheit elektrisch verbunden ist.

5. Vorrichtung nach einem der Ansprüche 1 bis 4, **dadurch gekennzeichnet, daß** der in Längsrichtung beweglich angetriebene, hohle Streckstempel (11) ein Stahlrohr (34) ist mit einer kappenförmigen Streckspitze (33), an welcher der Fließmittelaustritt (20) in Lochstruktur angebracht ist, und daß das Rückschlagventil (23) einen gegen einen am Stahlrohr (34) innen befestigten Dichtsitz (38) beweglichen und vorzugsweise Wirbelungsmittel tragenden Ventilkörper (37) aufweist.

6. Vorrichtung nach einem der Ansprüche 1 bis 5, **dadurch gekennzeichnet, daß** die Aufnahme (4) senkrecht zu ihrer Längsmittelachse (13) bewegbar angetrieben ist.

7. Vorrichtung nach einem der Ansprüche 1 bis 6, **dadurch gekennzeichnet, daß** die Aufnahme (4) an dem dem Verteilerblock (14) abgewandten Ende zur Bildung eines Serviceraumes (5) erweitert ist, in welchem vorzugsweise eine Zentrierung (6) eingesetzt ist.

8. Vorrichtung nach einem der Ansprüche 1 bis 7, **dadurch gekennzeichnet, daß** in dem vorzugsweise ortsfesten Verteilerblock (14) ein relativ zu diesem axial bewegbar angetriebener Hohlkolben (17) vorgesehen ist, der an seinem äußeren, der Aufnahme (4) zugewandten Ende eine zu der Aufnahme passende, ringförmige Gegendichtfläche (18) aufweist.

9. Vorrichtung nach einem der Ansprüche 1 bis 8, **dadurch gekennzeichnet, daß** in dem Vertellerblock (14) zur Führung des Streckstempels (11) eine dichtende Durchführung (16) in Flucht zu dem Hohlkolben (17) angebracht ist

10. Vorrichtung nach einem der Ansprüche 1 bis 9, **dadurch gekennzeichnet, daß** wenigstens eine mit der Dosiereinheit verbundene Zuführ- (10', 21) und eine Abführleitung (10) an den Verteilerblock (14) angeschlossen sind.

11. Vorrichtung nach einem der Ansprüche 1 bis 12, **dadurch gekennzeichnet, daß** in jeder der an dem Verteilerblock (14) angeschlossenen Zuführ- (9, 10', 21) und Abführleitungen (10) ein Rückschlagventil (23) angeschlossen ist und die Zündeinrichtung (12) in dem Verteilerblock (14) angebracht ist.

12. Vorrichtung nach einem der Ansprüche 1 bis 11, **dadurch gekennzeichnet, daß** der Hohlkolben (17) an seinem der Aufnahme (4) zugewandten Ende einen ringförmigen Dichtsitz (47, 48) aufweist und der Streckstempel (11) an seinem in den herzustellenden Behälter (1, 1') bewegbaren Ende für den Eingriff mit dem Dichtsitz eine senkrecht zu seiner Längsachse (13) radiale Erweiterung (46) trägt.

## Claims

1. Device for manufacturing containers (1, 1') from a plastics material which can be formed by stretch-blowing with a mould, the internal space of which corresponds to the finished container (1), which is held by its open end (7) by a receiving portion (4), wherein lines (9, 10) connected to a metering unit are provided on the receiving portion (4), a moveable stretching die (11) is guided axially through the receiving portion (4) and an ignition means (12) is arranged in order to ignite an explosive gas mixture inside the container (1'), and wherein heating and cooling means are provided, **characterised in that** the receiving portion (4), at its end opposite the container (1) can be engaged in a flowable medium-tight manner with a distributor module (14), through which the stretching die (11) is moveably passed axially extending the receiving portion (4), and on which at least one connector for flowable media (9, 10, 21) is fitted, that the device-side internal space (22) can be closed for sealing in the area of the at least one connector for flowable media (9, 10, 21), that the ignition means (12) is arranged in the device-side internal space (22), that the stretching die (11) is configured hollow, with at least one outlet aperture (20) arranged on a stretching die tip (33) and with at least one internal channel (39) connecting the outlet aperture (20) and the flowable medium inlet (21), and **in that** preferably a closure means for sealing off the device-side internal space (22) is fitted in the area of the outlet aperture (20).

2. Device according to claim 1, **characterised in that** the receiving portion (4) is hollow and has on its end opposite the container (1) an annular sealing surface (19) through which the stretching die (11) is moveably passed axially extending the receiving portion (4).

3. Device according to claim 1 or 2 **characterised in that** the closing means for sealing off the device-side interior space (22) is a non-return valve (23).

4. Device according to one of claims 1 to 3, **characterised in that** in the area of the outlet aperture (20), an ignition means (12) is fitted in the hollow stretching die (11) on the side of the non-return valve (23) facing the outlet aperture (20), and is preferably electrically connected via the cable (36) running in the hollow stretching die (11) to a control unit.

5. Device according to one of claims 1 to 4, **characterised in that** the hollow stretching die (11) driven moveably in the longitudinal direction is a steel tube (34) with a cap-shaped stretching die tip (33) on which the flowable medium outlet (20) is fitted in a hole structure, and **in that** the non-return valve (23) is provided with a valve body (37) moveable with respect to a sealing seat (38) fitted inside the steel tube (34), and preferably carrying turbulence producing means.

6. Device according to one of claims 1 to 5, **characterised in that** the receiving portion (4) is moveably driven perpendicular to its longitudinal central axis (13).

7. Device according to one of claims 1 to 6, **characterised in that** the receiving portion (4) is widened at the end opposite the distributor module (14) to form a service space (5) in which preferably a centring (6) is fitted.

8. Device according to one of claims 1 to 7, **characterised in that** in the preferably stationary distributor module (14) a hollow piston (17) arranged moveably axially with respect thereto is provided, which on its external end facing the receiving portion (4) is provided with an annular opposing sealing surface (18) fitting the receiving portion.

9. Device according to one of claims 1 to 8, **characterised in that** in the distributor module (14), for guiding the stretching die (11) a sealing passage (16) is fitted in alignment with the hollow piston (17).

10. Device according to one of claims 1 to 9, **characterised in that** at least one supply line (10', 21) and one drainage line (10) connected to the metering unit are connected to the distributor module (14).

11. Device according to one of claims 1 to 12, **characterised in that** in each of the supply lines (9, 10', 21) and drainage lines (10) connected to the distributor module (14), a non-return valve (23) is connected, and the ignition means (12) is fitted in the distributor module (14).

12. Device according to one of claims 1 to 11, **characterised in that** the hollow piston (17) is provided on its end facing the receiving portion (4) with an annular sealing seat (47, 48), and the stretching die (11) carries on its end which is moveable into the container to be manufactured (1, 1') a radially widened portion (46) perpendicular to its longitudinal axis (13) for engaging with the sealing seat.

## Revendications

1. Dispositif de fabrication de récipients (1, 1') à partir d'une matière plastique qui peut être mise en forme par étirage-soufflage au moyen d'un moule dont l'espace intérieur correspond au récipient fini (1) qui est maintenu à son extrémité ouverte (17) par un porte-pièce (4), dans lequel des conduites (9, 10) reliées à une unité de dosage sont prévues au niveau du porte-pièce (4), un piston d'étirage mobile (11) est guidé axialement à travers le porte-pièce (4), un dispositif d'amorçage (12) est prévu pour amorcer un mélange gazeux explosif à l'intérieur du récipient (1') et des dispositifs de chauffage et de refroidissement sont prévus, **caractérisé en ce que** le porte-pièce (4) peut être amené en engagement au niveau de son extrémité opposée au récipient (1), de façon étanche au solvant, avec un bloc distributeur (14) à travers lequel le piston d'étirage (11) est guidé de façon mobile dans le prolongement axial du porte-pièce (4) et au niveau duquel est monté au moins un raccord de solvant (9, 10, 21), l'espace intérieur (22) du côté du dispositif peut être fermé au niveau du raccord de solvant (9, 10, 21) au moins en vue de réaliser l'étanchéité, le dispositif d'amorçage (12) est monté dans l'espace intérieur (22) du côté du dispositif, le piston d'étirage (11) est conformé creux et est doté d'au moins une ouverture de sortie (20) ménagée à la pointe d'étirage et d'au moins un canal intérieur (39) reliant l'ouverture de sortie (20) et l'entrée de solvant (25) et un moyen de fermeture est avantageusement monté au niveau de l'ouverture de sortie (20) en vue de rendre étanche l'espace intérieur (22) du côté du dispositif.

2. Dispositif selon la revendication 1, **caractérisé en ce que** le porte-pièce (4) est creux et comporte à son extrémité opposée au récipient (1) une surface d'étanchéité annulaire (19) à travers laquelle le piston d'étirage (11) est guidé de façon mobile dans le prolongement axial du porte-pièce (4).

3. Dispositif selon la revendication 1 ou 2, **caractérisé en ce que** le moyen de fermeture destiné à rendre étanche l'espace intérieur (22) du côté du dispositif est un clapet de non-retour (23).

4. Dispositif selon l'une des revendications 1 à 3, **caractérisé en ce que**, au niveau de l'ouverture de sortie (20), un dispositif d'amorçage (12) est monté dans le piston d'étirage (11) du côté du clapet de non-retour (23) qui est dirigé vers l'ouverture de sortie (20) et qui est avantageusement relié électriquement à une unité de commande via des câbles (36) s'étendant dans le piston d'étirage creux (11).

5. Dispositif selon l'une des revendications 1 à 4, **caractérisé en ce que** le piston d'étirage creux (11), entraîné longitudinalement, est un tube en acier (34) comportant une pointe d'étirage (33) en forme de chapeau au niveau de laquelle la sortie de solvant (20) est ménagée sous la forme d'une structure perforée, et **en ce que** le clapet de non-retour (23) comporte un corps de clapet (37) qui est mobile en direction d'un siège étanche (38) fixé à l'intérieur au tube en acier (34) et qui supporte avantageusement un moyen générateur de turbulences.

6. Dispositif selon l'une des revendications 1 à 5, **caractérisé en ce que** le porte-pièce (4) est entraîné de façon à pouvoir se déplacer perpendiculairement à son axe médian longitudinal (13).

7. Dispositif selon l'une des revendications 1 à 6, **caractérisé en ce que** le porte-pièce (4) est évasé à l'extrémité opposée au bloc distributeur (14) en vue de former un espace de service (5) dans lequel est inséré avantageusement un dispositif de centrage (6).

8. Dispositif selon l'une des revendications 1 à 7, **caractérisé en ce qu'**il est prévu dans le bloc distributeur (14), avantageusement fixe, un piston creux (17) qui est entraîné de façon à pouvoir se déplacer axialement par rapport audit bloc distributeur et qui présente à son extrémité extérieure dirigée vers le porte-pièce (4) une surface d'étanchéité homologue (18) de forme annulaire et adaptée au porte-pièce.

9. Dispositif selon l'une des revendications 1 à 8, **caractérisé en ce qu'**un passage étanche (16) est ménagé dans le bloc distributeur (14) en alignement avec le piston creux (17) en vue de guider le piston d'étirage (11).

10. Dispositif selon l'une des revendications 1 à 9, **caractérisé en ce que** au moins une conduite d'amenée (10', 21) reliée à l'unité de dosage et une ligne de sortie (10) sont raccordées au bloc distributeur (14).

11. Dispositif selon l'une des revendications 1 à 10, **caractérisé en ce qu'**un clapet de non-retour (23) est raccordé à chacune des conduites d'amenée (9, 10', 21) et de sortie (10) raccordées au bloc distributeur (14) et **en ce que** le dispositif d'allumage (12) est monté dans le bloc distributeur (14).

12. Dispositif selon l'une des revendications 1 à 11, **caractérisé en ce que** le piston creux (17) comporte à son extrémité dirigée vers le porte-pièce (4) un siège d'étanchéité annulaire (47, 48), et le piston d'étirage (11) présente à son extrémité mobile dans le récipient (1, 1') à fabriquer un évasement radial (46) perpendiculaire à son axe longitudinal (13) en vue de l'engagement avec le siège d'étanchéité.
